(19) Europäisches Patentamt
European Patent Office
Office européen des brevets

(11) **EP 4 197 673 A1**

(12) **EUROPEAN PATENT APPLICATION**
published in accordance with Art. 153(4) EPC

(43) Date of publication:
**21.06.2023 Bulletin 2023/25**

(21) Application number: **21855809.6**

(22) Date of filing: **07.06.2021**

(51) International Patent Classification (IPC):
*B22F 9/00* (2006.01)     *B82Y 30/00* (2011.01)
*B41J 2/01* (2006.01)     *C09D 11/322* (2014.01)
*C09D 11/38* (2014.01)     *C09D 11/52* (2014.01)
*H01B 1/22* (2006.01)     *B41M 5/00* (2006.01)
*H01B 13/00* (2006.01)

(52) Cooperative Patent Classification (CPC):
**B22F 1/00; B22F 9/00; B41J 2/01; B41M 5/00;
B82Y 30/00; C09D 11/322; C09D 11/36;
C09D 11/38; C09D 11/52; H01B 1/22; H01B 13/00**

(86) International application number:
**PCT/JP2021/021546**

(87) International publication number:
**WO 2022/034730 (17.02.2022 Gazette 2022/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.08.2020 JP 2020136811**

(71) Applicant: **Kao Corporation
Chuo-ku
Tokyo 103-8210 (JP)**

(72) Inventors:
• **YOSHIDA, Tomohide
Wakayama-shi, Wakayama 640-8580 (JP)**
• **SAKAUE, Sho
Wakayama-shi, Wakayama 640-8580 (JP)**

(74) Representative: **Hoffmann Eitle
Patent- und Rechtsanwälte PartmbB
Arabellastraße 30
81925 München (DE)**

(54) **METAL FINE PARTICLE DISPERSION**

(57) The present invention relates to a metal fine particle dispersion containing metal fine particles A, a polyalkylene glycol dialkyl ether B and a polyol C, in which a content mass ratio of the polyalkylene glycol dialkyl ether B to the metal fine particles A (polyalkylene glycol dialkyl ether B/metal fine particles A) is not less than 0.5 and not more than 1.5, and the metal fine particles A are dispersed in the dispersion with a dispersant D; an ink containing the metal fine particle dispersion; and a method of producing a printed material using the ink.

EP 4 197 673 A1

## Description

FIELD OF THE INVENTION

The present invention relates to a metal fine particle dispersion, an ink containing the metal fine particle dispersion, and a method for producing a printed material using the ink.

BACKGROUND OF THE INVENTION

Metal fine particles obtained by atomizing a metal into fine particles having a nano-order size are capable of exhibiting a variety of functions and properties upon use thereof, and it has been therefore expected that the metal fine particles are used in a wide variety of industrial applications.

As an example of industrial development of the metal fine particles, studies have been made on use of an ink containing the metal fine particles in the application of printed electronics in which electronic circuits or devices are manufactured by a printing technology.

The printed electronics has been expected from the standpoints of improvement in convenience of information communication terminal equipments, such as displays, sensors, etc., promotion of energy saving, etc., and intense studies have been made to improve properties of the ink containing the metal fine particles as well as a metal fine particle dispersion used in the ink.

For example, JP 2007-194174A (Patent Literature 1) aims at providing an ink for conductive pattern with which a conductive pattern that undergoes less occurrence of cracking can be produced, and discloses an ink for conductive pattern which is constituted of a colloid solution containing at least colloid particles containing silver, in which the colloid solution contains at least one nonionic compound selected from the group consisting of tetraethylene glycol, polyethylene glycol and a propyleneoxide/ethyleneoxide block copolymer, and a content of the nonionic compound in the solution is more than 5% by mass on the basis of the silver, and the like.

JP 2007-327034A (Patent Literature 2) aims at providing a metal ink composition for inkjet printing using nanoparticles that are synthesized in a water base, and discloses a metal ink composition which includes specific amounts of metal nanoparticles and an organic solvent where the organic solvent is made of an ethylene glycol-based ether or a mixed solvent including the ethylene glycol-based ether.

JP 2013-231103A (Patent Literature 3) aims at providing a metal ultrafine particle-containing composition from which a conductive pattern having good printing stability and excellent electrical conductivity is obtained, and the like, and discloses a metal ultrafine particle-containing composition containing water, metal ultrafine particles, a sugar, a polyhydric alcohol and/or a derivative thereof, and a polyethylene glycol and/or a derivative thereof in which respective contents of water, the polyhydric alcohol and/or the derivative thereof, and the polyethylene glycol and/or the derivative thereof in the whole amount of the metal ultrafine particle-containing composition satisfy the predetermined relationships, and the like.

SUMMARY OF THE INVENTION

The present invention relates to a metal fine particle dispersion, containing metal fine particles A, a polyalkylene glycol dialkyl ether B and a polyol C, in which:

a content mass ratio of the polyalkylene glycol dialkyl ether B to the metal fine particles A (polyalkylene glycol dialkyl ether B/metal fine particles A) is not less than 0.5 and not more than 1.5; and
the metal fine particles A are dispersed in the dispersion with a dispersant D.

DETAILED DESCRIPTION OF THE INVENTION

When utilizing the ink containing the metal fine particles in printed electronics, a metal film formed by sintering the metal fine particles has still failed to exhibit a sufficiently low resistivity, and therefore it has been demanded to further improve properties of the ink.

In addition, since the ink containing the metal fine particles has to be stored in a chilled condition owing to dispersion stability of the metal fine particles, there tends to occur such a problematic case that the ink is deteriorated in workability upon use thereof. Therefore, it has been demanded to provide a metal fine particle dispersion or an ink containing the metal fine particles which is excellent in storage stability even under the environmental conditions at an ordinary temperature or higher.

However, the technologies described in the Patent Literatures 1 to 3 have been incapable of satisfying the requirements concerning resistivity of the metal film obtained after sintering the metal fine particles as well as storage stability of the dispersion or ink, and therefore it has been demanded to further improve properties of the metal fine particle dispersion and the ink containing the metal fine particles.

The present invention relates to a metal fine particle dispersion that is excellent in storage stability and is capable of forming a metal film having low resistivity, an ink containing the metal fine particle dispersion, and a method for producing a printed material using the ink.

The present inventors have noticed that by incorporating a polyalkylene glycol dialkyl ether and a polyol into the metal fine particle dispersion and controlling a content mass ratio of the polyalkylene glycol dialkyl ether to the metal fine particles to a specific range, it is possible to improve dispersion stability of the metal fine particles in the dispersion and thereby form a good metal film, and have found that with such knowledge, it is possible to provide a metal fine particle dispersion that is excellent in storage stability and is capable of forming a metal film having low resistivity, an ink containing the metal fine particle dispersion, and a method for producing a printed material using the ink.

That is, the present invention relates to the following aspects [1] to [3].

[1] A metal fine particle dispersion, containing metal fine particles A, a polyalkylene glycol dialkyl ether B and a polyol C, in which:

a content mass ratio of the polyalkylene glycol dialkyl ether B to the metal fine particles A (polyalkylene glycol dialkyl ether B/metal fine particles A) is not less than 0.5 and not more than 1.5; and
the metal fine particles A are dispersed in the dispersion with a dispersant D.

[2] An ink containing the metal fine particle dispersion according to the above aspect [1].
[3] A method for producing a printed material, including the step of applying the ink according to the above aspect [2] onto a printing substrate to obtain the printed material on which a metal film is formed.

In accordance with the present invention, it is possible to provide a metal fine particle dispersion that is excellent in storage stability and is capable of forming a metal film having low resistivity, an ink containing the metal fine particle dispersion, and a method for producing a printed material using the ink.

[Metal Fine Particle Dispersion]

The metal fine particle dispersion according to the present invention contains metal fine particles A, a polyalkylene glycol dialkyl ether B and a polyol C, in which a content mass ratio of the polyalkylene glycol dialkyl ether B to the metal fine particles A (polyalkylene glycol dialkyl ether B/metal fine particles A) is not less than 0.5 and not more than 1.5; and the metal fine particles A are dispersed in the dispersion with a dispersant D.

In the metal fine particle dispersion according to the present invention, the metal fine particles A are dispersed in a medium containing the polyalkylene glycol dialkyl ether B and the polyol C with the dispersant D.

According to the present invention, it is possible to provide a metal fine particle dispersion that is excellent in storage stability and is capable of forming a metal film having low resistivity, an ink containing the metal fine particle dispersion, and a method for producing a printed material using the ink. The reason why the aforementioned advantageous effects can be attained by the present invention is considered as follows, though it is not clearly determined yet.

That is, the metal fine particle dispersion according to the present invention contains the metal fine particles dispersed with the dispersant, the polyalkylene glycol dialkyl ether and the polyol. When subjecting the metal fine particle dispersion to the sintering step, the polyol is volatilized from the dispersion, so that a concentration of the metal fine particles in the dispersion is increased to thereby accelerate sintering of the metal fine particles. On the other hand, since the content mass ratio of the polyalkylene glycol dialkyl ether to the metal fine particles is controlled to the specific range, it is considered that these solvents are gradually removed from the dispersion during the sintering of the metal fine particles, whereby it is possible to form a good metal film having a less number of voids and reduce resistivity of the metal film.

In addition, in the metal fine particle dispersion according to the present invention, the metal fine particles are dispersed in the dispersion with the dispersant, and furthermore the surface of the respective metal fine particles is loosely coated with the polyalkylene glycol dialkyl ether, so that it is considered that the metal fine particles can be improved in dispersion stability. Moreover, it is also considered that the combined use of the polyalkylene glycol dialkyl ether and the polyol serves for improving storage stability of the metal fine particle dispersion.

<Metal Fine Particles A>

Examples of the metal (metal atom) constituting the metal fine particles A according to the present invention include Group 4 transition metals, such as titanium, zirconium, etc.; Group 5 transition metals, such as vanadium, niobium, etc.; Group 6 transition metals, such as chromium, molybdenum, tungsten, etc.; Group 7 transition metals, such as manganese, technetium, rhenium, etc.; Group 8 transition metals, such as iron, ruthenium, etc.; Group 9 transition metals, such as cobalt, rhodium, iridium, etc.; Group 10 transition metals, such as nickel, palladium, platinum, etc.; Group 11 transition metals, such as copper, silver, gold, etc.; Group 12 transition metals, such as zinc, cadmium, etc.; Group 13 transition metals, such as aluminum, gallium, indium, etc.; Group 14 transition metals, such as germanium, tin, lead, etc.; and the like. As the metal constituting the metal fine particles A, only one kind of metal may be used alone as a single metal, or two or more kinds of metals may be used in combination with each other in the form of an alloy. In particular, from the viewpoint of improving storage stability of the dispersion and reducing resistivity of the resulting metal film, the metal constituting the metal fine particles A preferably contains a transition metal belonging to Groups 4 to 11 in the 4th to 6th Periods of the Periodic Table, more preferably contains copper, or a noble metal, such as gold, silver, platinum, palladium, etc., even more preferably contains at least one metal selected from the group consisting of gold, silver, copper and palladium, further even more preferably contains at least one metal selected from the group consisting of gold, silver and copper, still further even more preferably contains at least one metal selected from the group consisting of silver and copper, and yet still further even more preferably contains silver. The kinds of metals may be determined by inductively coupled plasma atomic emission spectroscopy.

The cumulant average particle size of the metal fine particles A in the metal fine particle dispersion according to the present invention is preferably not less than 10 nm, more preferably not less than 15 nm, even more preferably not less than 17 nm and further even more preferably not less than 20 nm from the viewpoint of improving dispersion stability of the metal fine particles and thereby improving storage stability of the dispersion, and is also preferably not more than 100 nm, more preferably not more than 80 nm, even more preferably not more than 60 nm, further even more preferably not more than 50 nm, still further even more preferably not more than 40 nm and yet still further even more preferably not more than 35 nm from the viewpoint of atomizing the metal fine particles to reduce resistivity of the resulting metal film.

The cumulant average particle size may be measured by subjecting the metal fine particles to cumulant analysis using a laser particle analyzing system "ELS-8000" available from Otsuka Electrics Co., Ltd., as described in Examples below. The measurement is conducted under the conditions including a temperature of 25 °C, an angle between incident light and detector of 90° and a cumulative number of 100 times, in which a refractive index of water (1.333) is used as a refractive index of the dispersing medium, and a concentration of the sample to be measured is controlled to $5 \times 10^{-3}$% by mass (in terms of a solid content thereof.

The content of the metal fine particles A in the metal fine particle dispersion according to the present invention is preferably not less than 2% by mass, more preferably not less than 5% by mass, even more preferably not less than 10% by mass, further even more preferably not less than 15% by mass, still further even more preferably not less than 20% by mass and yet still further even more preferably not less than 25% by mass, for example, from the viewpoint of facilitating preparation of an ink using the dispersion as well as from the viewpoint of reducing resistivity of the resulting metal film, and is also preferably not more than 85% by mass, more preferably not more than 70% by mass, even more preferably not more than 50% by mass, further even more preferably not more than 40% by mass and still further even more preferably not more than 35% by mass from the viewpoint of improving dispersion stability of the metal fine particles and thereby improving storage stability of the dispersion.

In the case where the metal constituting the metal fine particles A contains silver and copper, the total content of silver and copper in the metal fine particles A is preferably not less than 80% by mass, more preferably not less than 90% by mass, even more preferably not less than 95% by mass, further even more preferably not less than 98% by mass and still further even more preferably substantially 100% by mass from the viewpoint of improving storage stability of the dispersion and reducing resistivity of the resulting metal film.

In addition, in the case where the metal constituting the metal fine particles A contains silver, the content of silver in the metal fine particles A is preferably not less than 80% by mass, more preferably not less than 90% by mass, even more preferably not less than 95% by mass, further even more preferably not less than 98% by mass and still further even more preferably substantially 100% by mass from the viewpoint of improving storage stability of the dispersion and reducing resistivity of the resulting metal film.

Also, in the case where the metal constituting the metal fine particles A contains copper, the content of copper in the metal fine particles A is preferably not less than 80% by mass, more preferably not less than 90% by mass, even more preferably not less than 95% by mass, further even more preferably not less than 98% by mass and still further even more preferably substantially 100% by mass from the viewpoint of improving storage stability of the dispersion and reducing resistivity of the resulting metal film.

The term "substantially 100% by mass" as used herein means that the metal constituting the metal fine particles A may contain unintended components. Examples of the unintended components that may be contained in the metal include unavoidable impurities.

<Polyalkylene Glycol Dialkyl Ether B>

The metal fine particle dispersion according to the present invention contains the polyalkylene glycol dialkyl ether B from the viewpoint of improving dispersion stability of the metal fine particles and improving storage stability of the dispersion as well as from the viewpoint of reducing resistivity of the resulting metal film.

The polyoxyalkylene group constituting the polyalkylene glycol dialkyl ether B is preferably at least one group selected from the group consisting of a polyoxyethylene group and a polyoxypropylene group and more preferably a polyoxyethylene group from the viewpoint of improving dispersion stability of the metal fine particles and improving storage stability of the dispersion as well as from the viewpoint of reducing resistivity of the resulting metal film.

Examples of the alkyl group constituting the polyalkylene glycol dialkyl ether B include a methyl group, an ethyl group, a propyl group, a butyl group, a pentyl group, and the like. The number of carbon atoms contained in the alkyl group is preferably not less than 1 and not more than 5, more preferably not less than 1 and not more than 4, even more preferably not less than 1 and not more than 3, further even more preferably not less than 1 and not more than 2, and yet further even more preferably 1, from the viewpoint of improving dispersion stability of the metal fine particles and improving storage stability of the dispersion as well as from the viewpoint of reducing resistivity of the resulting metal film. The polyalkylene glycol dialkyl ether B may be used alone or in combination of any two or more kinds thereof.

Specific examples of the polyalkylene glycol dialkyl ether B include polyoxyethylene dialkyl ethers, such as polyoxyethylene dimethyl ether, polyoxyethylene diethyl ether, polyoxyethylene dipropyl ether, polyoxyethylene dibutyl ether, polyoxyethylene dipentyl ether, triethylene glycol dimethyl ether, etc.; polyoxypropylene dialkyl ethers, such as polyoxypropylene dimethyl ether, polyoxypropylene diethyl ether, polyoxypropylene dipropyl ether, polyoxypropylene dibutyl ether, polyoxypropylene dipentyl ether, tripropylene glycol dipentyl ether, etc.; and the like.

Among these polyalkylene glycol dialkyl ethers B, from the viewpoint of improving dispersion stability of the metal fine particles and improving storage stability of the dispersion as well as from the viewpoint of reducing resistivity of the resulting metal film, preferred is at least one compound selected from the group consisting of a polyoxyethylene dialkyl ether and a polyoxypropylene dialkyl ether, more preferred is a polyoxyethylene dialkyl ether, and even more preferred is polyoxyethylene dimethyl ether.

The number-average molecular weight of the polyalkylene glycol dialkyl ether B is preferably not less than 100, more preferably not less than 160 and even more preferably not less than 200, and is also preferably not more than 5,000, more preferably not more than 3,000, even more preferably not more than 2,000, further even more preferably not more than 1,500, still further even more preferably not more than 1,000, yet still further even more preferably not more than 800, furthermore preferably not more than 500, and even furthermore preferably not more than 300, from the viewpoint of improving dispersion stability of the metal fine particles and improving storage stability of the dispersion as well as from the viewpoint of reducing resistivity of the resulting metal film.

The number-average molecular weight of the polyalkylene glycol dialkyl ether B may be measured by gel permeation chromatography (GPC).

The polyalkylene glycol dialkyl ether B preferably contains at least one compound selected from the group consisting of a polyoxyethylene dialkyl ether whose alkyl groups each have not less than 1 and not more than 5 carbon atoms and a polyoxypropylene dialkyl ether whose alkyl groups each have not less than 1 and not more than 5 carbon atoms, more preferably at least one compound selected from the group consisting of polyoxyethylene dimethyl ether and polyoxypropylene dimethyl ether, even more preferably polyoxyethylene dimethyl ether, further even more preferably polyoxyethylene dimethyl ether having a number-average molecular weight of not less than 160 and not more than 1500, and still further even more preferably polyoxyethylene dimethyl ether having a number-average molecular weight of not less than 160 and not more than 800, from the viewpoint of improving dispersion stability of the metal fine particles and improving storage stability of the dispersion as well as from the viewpoint of reducing resistivity of the resulting metal film.

The total content of preferably the at least one compound selected from the group consisting of a polyoxyethylene dialkyl ether whose alkyl groups each have not less than 1 and not more than 5 carbon atoms and a polyoxypropylene dialkyl ether whose alkyl groups each have not less than 1 and not more than 5 carbon atoms, more preferably the at least one compound selected from the group consisting of polyoxyethylene dimethyl ether and polyoxypropylene dimethyl ether, even more preferably the polyoxyethylene dimethyl ether, further even more preferably the polyoxyethylene dimethyl ether having a number-average molecular weight of not less than 160 and not more than 1500, and still further even more preferably the polyoxyethylene dimethyl ether having a number-average molecular weight of not less than 160 and not more than 800, in the polyalkylene glycol dialkyl ether B, is preferably not less than 80% by mass, more preferably not less than 90% by mass, even more preferably not less than 95% by mass, further even more preferably not less than 98% by mass and still further even more preferably substantially 100% by mass, from the viewpoint of improving dispersion stability of the metal fine particles and improving storage stability of the dispersion as well as from the viewpoint of reducing resistivity of the resulting metal film. The term "substantially 100% by mass" as used herein means that the polyalkylene glycol dialkyl ether B may contain unintended components. Examples of the unintended components that may be contained in the polyalkylene glycol dialkyl ether B include polyalkylene glycol dialkyl ether B components other than the aforementioned preferred polyalkylene glycol dialkyl ethers, which may be respectively contained in the aforementioned preferred polyalkylene glycol dialkyl ethers as the raw material.

The content of the polyalkylene glycol dialkyl ether B in the metal fine particle dispersion according to the present invention is preferably not less than 5% by mass, more preferably not less than 10% by mass, even more preferably not less than 15% by mass, further even more preferably not less than 20% by mass and still further even more preferably not less than 25% by mass from the viewpoint of improving dispersion stability of the metal fine particles and improving storage stability of the dispersion as well as from the viewpoint of reducing resistivity of the resulting metal film, and is also preferably not more than 50% by mass, more preferably not more than 45% by mass, even more preferably not more than 40% by mass and further even more preferably not more than 35% by mass from the viewpoint of reducing resistivity of the resulting metal film.

The content mass ratio of the polyalkylene glycol dialkyl ether B to the metal fine particles A (polyalkylene glycol dialkyl ether B/metal fine particles A) in the metal fine particle dispersion according to the present invention is not less than 0.5, preferably not less than 0.6, more preferably not less than 0.7, even more preferably not less than 0.8 and further even more preferably not less than 0.9, and is also not more than 1.5, preferably not more than 1.4, more preferably not more than 1.3, even more preferably not more than 1.2 and further even more preferably not more than 1.1, from the viewpoint of improving dispersion stability of the metal fine particles and improving storage stability of the dispersion as well as from the viewpoint of reducing resistivity of the resulting metal film.

<Polyol C>

The metal fine particle dispersion according to the present invention contains the polyol C from the viewpoint of improving dispersion stability of the metal fine particles and improving storage stability of the dispersion as well as from the viewpoint of reducing resistivity of the resulting metal film.

The polyol C is not particularly limited as long as the polyol C is in the form of a compound containing two or more alcoholic hydroxy groups in a molecule thereof. Examples of the polyol C include 1,2-alkanediols, such as ethylene glycol (boiling point: 197 °C), 1,2-propanediol (propylene glycol) (boiling point: 188 °C), 1,2-butanediol (boiling point: 193 °C), 1,2-pentanediol (boiling point: 206 °C), 1,2-hexanediol (boiling point: 223 °C), etc.; polyalkylene glycols, such as diethylene glycol (boiling point: 245 °C), triethylene glycol (boiling point: 287 °C), tetraethylene glycol (boiling point: 314 °C), polyethylene glycol, dipropylene glycol (boiling point: 232 °C), tripropylene glycol (boiling point: 271 °C), etc.; $\alpha,\omega$-alkanediols, such as 1,3-propanediol (boiling point: 210 °C), 1,4-butanediol (boiling point: 230 °C), 1,5-pentanediol (boiling point: 242 °C), etc.; diols, such as 1,3-butanediol (boiling point: 208 °C), 3-methyl-1,3-butanediol (boiling point: 203 °C), 2-methyl-2,4-pentanediol (boiling point: 196 °C), etc.; triols, such as glycerin, etc.; and the like. These polyols C may be used alone or in combination of any two or more kinds thereof.

The boiling point of the polyol C is preferably not lower than 70 °C, more preferably not lower than 90 °C, even more preferably not lower than 110 °C, further even more preferably not lower than 130 °C and still further even more preferably not lower than 150 °C, and is also preferably not higher than 300 °C, more preferably not higher than 250 °C, even more preferably not higher than 230 °C and further even more preferably not higher than 200 °C, from the viewpoint of improving dispersion stability of the metal fine particles and improving storage stability of the dispersion as well as from the viewpoint of reducing resistivity of the resulting metal film.

Incidentally, in the case where two or more polyols are used in combination as the polyol C, the boiling point of the polyol C means a weighted mean value of boiling points of the respective polyols contained in the polyol C which are weighted by contents (% by mass) of the respective polyols.

The polyol C preferably contains at least one compound selected from the group consisting of a diol and a triol, more preferably contains at least one compound selected from the group consisting of a 1,2-alkanediol, a polyalkylene glycol, an $\alpha,\omega$-alkanediol and glycerin, even more preferably contains at least one compound selected from the group consisting of a 1,2-alkanediol, an $\alpha,\omega$-alkanediol and glycerin, and further even more preferably contains at least one compound selected from the group consisting of a 1,2-alkanediol and an $\alpha,\omega$-alkanediol (these compounds are hereinafter collectively referred to as a component (C-1)), from the viewpoint of improving dispersion stability of the metal fine particles and improving storage stability of the dispersion as well as from the viewpoint of reducing resistivity of the resulting metal film. In addition, from the same viewpoint as described above, the polyol C preferably contains at least one compound selected from the group consisting of ethylene glycol, 1,2-propanediol, 1,4-butanediol and glycerin, more preferably at least one compound selected from the group consisting of ethylene glycol, 1,2-propanediol and 1,4-butanediol, even more preferably at least one compound selected from the group consisting of 1,2-propanediol and 1,4-butanediol, and even more preferably 1,2-propanediol (these compounds are hereinafter collectively referred to as a component (C-2)).

The total content of the component (C-1) or the component (C-2) in the polyol C is preferably not less than 80% by mass, more preferably not less than 90% by mass, even more preferably not less than 95% by mass, further even more preferably not less than 98% by mass and still further even more preferably substantially 100% by mass,

from the viewpoint of improving dispersion stability of the metal fine particles and improving storage stability of the dispersion as well as from the viewpoint of reducing resistivity of the resulting metal film. The term "substantially 100% by mass" as used herein means that the polyol C may contain unintended components. Examples of the unintended components that may be contained in the polyol C include the polyol C components other than the aforementioned component (C-1) and the component (C-2), which may be contained in the aforementioned polyol as the raw material.

The content of the polyol C in the metal fine particle dispersion according to the present invention is preferably not less than 3% by mass, more preferably not less than 5% by mass, even more preferably not less than 10% by mass, further even more preferably not less than 15% by mass and still further even more preferably not less than 20% by mass, and is also preferably not more than 40% by mass, more preferably not more than 35% by mass, even more preferably not more than 30% by mass and further even more preferably not more than 25% by mass, from the viewpoint of improving dispersion stability of the metal fine particles and improving storage stability of the dispersion as well as from the viewpoint of reducing resistivity of the resulting metal film.

The content mass ratio of the polyol C to the metal fine particles A (polyol C/metal fine particles A) in the metal fine particle dispersion according to the present invention is preferably not less than 0.1, more preferably not less than 0.3, even more preferably not less than 0.5 and further even more preferably not less than 0.7 from the viewpoint of improving dispersion stability of the metal fine particles and improving storage stability of the dispersion, and is also preferably not more than 1.3, more preferably not more than 1.2, even more preferably not more than 1.0, further even more preferably not more than 0.9 and still further even more preferably not more than 0.8 from the viewpoint of reducing resistivity of the resulting metal film.

The total content of the polyalkylene glycol dialkyl ether B and the polyol C in the metal fine particle dispersion according to the present invention is preferably not less than 10% by mass, more preferably not less than 20% by mass, even more preferably not less than 30% by mass, further even more preferably not less than 40% by mass, still further even more preferably not less than 42% by mass, yet still further even more preferably not less than 45% by mass, and furthermore preferably not less than 50% by mass from the viewpoint of improving dispersion stability of the metal fine particles and improving storage stability of the dispersion, and is also preferably not more than 80% by mass, more preferably not more than 70% by mass, even more preferably not more than 60% by mass and further even more preferably not more than 55% by mass from the viewpoint of reducing resistivity of the resulting metal film.

The content mass ratio of the polyalkylene glycol dialkyl ether B to the polyol C (polyalkylene glycol dialkyl ether B/polyol C) in the metal fine particle dispersion is preferably not less than 0.3, more preferably not less than 0.5, even more preferably not less than 0.7, further even more preferably not less than 1 and still further even more preferably not less than 1.1, and is also preferably not more than 2.5, more preferably not more than 2, even more preferably not more than 1.7 and further even more preferably not more than 1.5, from the viewpoint of improving dispersion stability of the metal fine particles and improving storage stability of the dispersion as well as from the viewpoint of reducing resistivity of the resulting metal film.

<Dispersant D>

In the present invention, the metal fine particles A are dispersed in the dispersion with the dispersant D. The dispersant B is not particularly limited as long as it is a substance having a function capable of dispersing the metal fine particles, such as a surfactant, a polymer, etc.

From the viewpoint of improving dispersion stability of the metal fine particles and improving storage stability of the dispersion as well as from the viewpoint of reducing resistivity of the resulting metal film, it is preferred that the dispersant D is in the form of a polymer that contains a hydrophilic group, and it is more preferred that the polymer as the dispersant D contains the hydrophilic group on a side chain thereof.

Examples of the hydrophilic group include nonionic groups, such as a polyoxyalkylene group, a hydroxy group, an amide group, etc.; anionic groups, e.g., groups that are capable of releasing hydrogen ions upon dissociation thereof, such as a carboxy group (-COOM), a sulfonic acid group ($-SO_3M$), a phosphoric acid group (-OPOsMs), etc., or dissociated ion forms of these groups (such as $-COO^-$, $-SO_3^-$, $-OPO_3^{2-}$ and $-OPO_3^-M$), etc.; cationic groups, such as protonic acid salts of a primary, secondary or tertiary amino group, a quaternary ammonium group, etc.; and the like. In the aforementioned chemical formulae, M represents a hydrogen atom, an alkali metal, ammonium or an organic ammonium.

From the viewpoint of improving dispersion stability of the metal fine particles and improving storage stability of the dispersion as well as from the viewpoint of reducing resistivity of the resulting metal film, as the dispersant D, preferred are polymers containing at least one group selected from the group consisting of a nonionic group and an anionic group.

Examples of the nonionic group-containing polymer include a polyoxyalkylene group-containing polymer, a polymer having a structure derived from vinyl pyrrolidone, such as polyvinyl pyrrolidone, etc., a polymer having a structure derived from acrylamide, such as polyacrylamide, etc., polyvinyl alcohol, and the like.

The anionic group-containing polymer is preferably in the form of a carboxy group-containing polymer. As the basic structure of the carboxy group-containing polymer, there may be mentioned a vinyl-based polymer, such as an acrylic resin, a styrene-based resin, a styrene-acrylic resin, an acrylic silicone-based resin, etc.; a condensation-based polymer, such as a polyester, a polyurethane, etc.; and the like.

The dispersant D preferably contains at least one polymer selected from the group consisting of a carboxy group-containing polymer and a polyoxyalkylene group-containing polymer, more preferably contains a carboxy group-containing polymer, even more preferably contains a vinyl-based polymer containing a constitutional unit derived from a carboxy group-containing monomer (d-2), and further even more preferably is a vinyl-based polymer containing a constitutional unit derived from a carboxy group-containing monomer (d-2), from the viewpoint of improving dispersion stability of the metal fine particles and improving storage stability of the dispersion as well as from the viewpoint of reducing resistivity of the resulting metal film.

[Carboxy Group-Containing Monomer (d-2)]

The carboxy group contained in the monomer (d-2) is as described hereinbefore.

Specific examples of the monomer (d-2) include unsaturated monocarboxylic acids, such as (meth)acrylic acid, crotonic acid, 2-methacryloyloxymethylsuccinic acid, etc.; unsaturated dicarboxylic acids, such as maleic acid, itaconic acid, fumaric acid, citraconic acid, etc.; and the like. Incidentally, the aforementioned unsaturated dicarboxylic acids may be in the form of an anhydride thereof.

These monomers (d-2) may be used alone or in combination of any two or more thereof.

The monomer (d-2) is preferably at least one monomer selected from the group consisting of (meth)acrylic acid and maleic acid from the viewpoint of improving dispersion stability of the metal fine particles and improving storage stability of the dispersion as well as from the viewpoint of reducing resistivity of the resulting metal film.

The term "(meth)acrylic acid" as used in the present specification means at least one compound selected from the group consisting of acrylic acid and methacrylic acid, and the "(meth)acrylic acid" is hereinlater also defined in the same way.

The vinyl-based polymer containing a constitutional unit derived from the carboxy group-containing monomer (d-2) which is used as the dispersant D is preferably at least one polymer selected from the group consisting of a homopolymer of the carboxy group-containing monomer (d-2) and a copolymer containing a constitutional unit derived from the carboxy group-containing monomer (d-2).

As the homopolymer of the carboxy group-containing monomer (d-2), preferred are polycarboxylic acids, such as poly(meth)acrylic acid, polymaleic acid (or anhydrides thereof), and the like, from the viewpoint of improving dispersion stability of the metal fine particles and improving storage stability of the dispersion as well as from the viewpoint of reducing resistivity of the resulting metal film. Among these homopolymers, from the same viewpoint as described above, more preferred is poly(meth)acrylic acid.

As the copolymer containing a constitutional unit derived from the carboxy group-containing monomer (d-2), preferred is a vinyl-based polymer containing the constitutional unit derived from the carboxy group-containing monomer (d-2) and a constitutional unit derived from a polyoxyalkylene group-containing monomer (d-1), from the viewpoint of improving dispersion stability of the metal fine particles and improving storage stability of the dispersion as well as from the viewpoint of reducing resistivity of the resulting metal film. In this case, the aforementioned vinyl-based polymer may be obtained by copolymerizing raw material monomers containing the monomer (d-1) and the monomer (d-2) with each other. The aforementioned vinyl-based polymer may be in the form of any of a block copolymer, a random copolymer and an alternating copolymer.

[Polyoxyalkylene Group-Containing Monomer (d-1)]

The monomer (d-1) is preferably a monomer that is capable of introducing a polyoxyalkylene group into the vinyl-based polymer as a side chain of the polymer from the viewpoint of improving dispersion stability of the metal fine particles and improving storage stability of the dispersion as well as from the viewpoint of reducing resistivity of the resulting metal film. Examples of the monomer (d-1) include a polyalkylene glycol (meth)acrylate, an alkoxy polyalkylene glycol (meth)acrylate, a phenoxy polyalkylene glycol (meth)acrylate and the like. These monomers (d-1) may be used alone or in combination of any two or more thereof. The term "(meth)acrylate" as used in the present specification means at least one compound selected from the group consisting of an acrylate and a methacrylate, and the "(meth)acrylate" is hereinafter also defined in the same way.

As the monomer (d-1), from the viewpoint of improving dispersion stability of the metal fine particles and improving storage stability of the dispersion as well as from the viewpoint of reducing resistivity of the resulting metal film, preferred is at least one monomer selected from the group consisting of a polyalkylene glycol (meth)acrylate and an alkoxy polyalkylene glycol (meth)acrylate, and more preferred is an alkoxy polyalkylene glycol (meth)acrylate. The number of carbon atoms in an alkoxy group of the alkoxy polyalkylene glycol (meth)acrylate is preferably not less than 1 and not more than 8, and more preferably not less than 1 and not more than 4, from the same viewpoint as described above.

Examples of the alkoxy polyalkylene glycol (meth)acrylate include methoxy polyalkylene glycol (meth)acrylates, ethoxy polyalkylene glycol (meth)acrylates, propoxy polyalkylene glycol (meth)acrylates, butoxy polyalkylene glycol (meth)acrylates, octoxy polyalkylene glycol (meth)acrylates and the like.

The polyoxyalkylene group of the monomer (d-1) preferably contains a unit(s) derived from an alkyleneoxide having not less than 2 and not more than 4 carbon atoms from the viewpoint of improving dispersion stability of the metal fine particles and improving storage stability of the dispersion as well as from the viewpoint of reducing resistivity of the resulting metal film. Examples of the alkyleneoxide include ethyleneoxide, propyleneoxide, butyleneoxide and the like. Among these alkyleneoxides, preferred is ethyleneoxide.

The number of the units derived from the alkyleneoxide in the aforementioned polyoxyalkylene group is preferably not less than 2 and more preferably not less than 5, and is also preferably not more than 100, more preferably not more than 70, even more preferably not more than 50, further even more preferably not more than 30 and still further even more preferably not more than 15, from the viewpoint of improving dispersion stability of the metal fine particles and improving storage stability of the dispersion as well as from the viewpoint of reducing resistivity of the resulting metal film.

The aforementioned polyoxyalkylene group may be in the form of a copolymer containing a unit derived from ethyleneoxide and a unit derived from propyleneoxide. The molar ratio of the unit derived from ethyleneoxide (EO) to the unit derived from propyleneoxide (PO) [EO/PO] is preferably not less than 60/40, more preferably not less than 65/35 and even more preferably not less than 70/30, and is also preferably not more than 90/10, more preferably not more than 85/15 and even more preferably not more than 80/20, from the viewpoint of improving dispersion stability of the metal fine particles and improving storage stability of the dispersion as well as from the viewpoint of reducing resistivity of the resulting metal film.

The copolymer containing the unit derived from ethyleneoxide and the unit derived from propyleneoxide may be in the form of any of a block copolymer, a random copolymer and an alternating copolymer.

Specific examples of commercially available products of the monomer (d-1) include "NK ESTER AM-90G", "NK ESTER AM-130G", "NK ESTER AMP-20GY", "NK ESTER M-20G", "NK ESTER M-40G", "NK ESTER M-90G", "NK ESTER M-230G" and the like as products available from Shin-Nakamura Chemical Co., Ltd.; and "BLEMMER PE-90", "BLEMMER PE-200", "BLEMMER PE-350" and the like, "BLEMMER PME-100", "BLEMMER PME-200", "BLEMMER PME-400", "BLEMMER PME-1000", "BLEMMER PME-4000" and the like, "BLEMMER PP-500", "BLEMMER PP-800", "BLEMMER PP-1000" and the like, "BLEMMER AP-150", "BLEMMER AP-400", "BLEMMER AP-550" and the like, and "BLEMMER 50PEP-300", "BLEMMER 50POEP-800B", "BLEMMER 43PAPE-600B" and the like as products available from NOF Corporation.

The aforementioned vinyl-based polymer may contain a constitutional unit derived from a monomer other than the polyoxyalkylene group-containing monomer (d-1) and the carboxy group-containing monomer (d-2) unless the advantageous effects of the present invention are adversely affected by inclusion thereof.

Examples of the other monomer include a hydrophobic monomer, such as an aromatic group-containing monomer; a (meth)acrylate containing a hydrocarbon group derived from an aliphatic alcohol; and the like.

The term "hydrophobic monomer" as used in the present specification means such a monomer that a solubility of the monomer in water as measured by dissolving the monomer in 100 g of ion-exchanged water at 25 °C until reaching a saturation concentration thereof is less than 10 g.

The aromatic group-containing monomer is preferably a vinyl monomer containing an aromatic group having not less than 6 and not more than 22 carbon atoms which may contain a substituent group containing a hetero atom, and more preferably at least one monomer selected from the group consisting of a styrene-based monomer and an aromatic group-containing (meth)acrylate. The molecular weight of the aromatic group-containing monomer is preferably less than 500.

Examples of the styrene-based monomer include styrene, $\alpha$-methyl styrene, 2-methyl styrene, 4-vinyl toluene (4-methyl styrene), divinyl benzene and the like. Among these styrene-based monomers, from the viewpoint of improving dispersion stability of the metal fine particles and improving storage stability of the dispersion as well as from the viewpoint of reducing resistivity of the resulting metal film, preferred are styrene and $\alpha$-methyl styrene.

As the aromatic group-containing (meth)acrylate, preferred are phenyl (meth)acrylate, benzyl (meth)acrylate, phenoxyethyl (meth)acrylate, etc., and more preferred is benzyl (meth)acrylate.

As the (meth)acrylate containing a hydrocarbon group derived from an aliphatic alcohol, preferred are those (meth)acrylates containing a hydrocarbon group derived from an aliphatic alcohol having not less than 1 and not more than 22 carbon atoms, from the viewpoint of improving dispersion stability of the metal fine particles and improving storage stability of the dispersion as well as from the viewpoint of reducing resistivity of the resulting metal film. Examples of the (meth)acrylates containing a hydrocarbon group derived from an aliphatic alcohol having not less than 1 and not more than 22 carbon atoms include (meth)acrylates containing a linear alkyl group, such as methyl (meth)acrylate, ethyl (meth)acrylate, propyl (meth)acrylate, butyl (meth)acrylate, pentyl (meth)acrylate, octyl (meth)acrylate, decyl (meth)acrylate, dodecyl (meth)acrylate, stearyl (meth)acrylate, etc.; (meth)acrylates containing a branched alkyl group, such as isopropyl (meth)acrylate, isobutyl (meth)acrylate, *tert*-butyl (meth)acrylate, isopentyl (meth)acrylate, isooctyl (meth)acrylate, isodecyl (meth)acrylate, isododecyl (meth)acrylate, isostearyl (meth)acrylate, 2-ethylhexyl (meth)acrylate, etc.; (meth)acrylates containing an alicyclic alkyl group, such as cyclohexyl (meth)acrylate, etc.; and the like.

In the case where the dispersant D is the vinyl-based polymer that contains the constitutional unit derived from the polyoxyalkylene group-containing monomer (d-1) and the constitutional unit derived from the carboxy group-containing monomer (d-2), the contents of the respective monomers in the raw material monomers (contents of non-neutralized components; hereinafter defined in the same way) upon production of the vinyl-based polymer, or the contents of the constitutional units derived from the respective monomers in the vinyl-based polymer, are as follows, from the viewpoint of improving dispersion stability of the metal fine particles and improving storage stability of the dispersion as well as from the viewpoint of reducing resistivity of the resulting metal film.

The content of the polyoxyalkylene group-containing monomer (d-1) is preferably not less than 50% by mass, more preferably not less than 70% by mass, even more preferably not less than 90% by mass and further even more preferably not less than 95% by mass, and is also preferably not more than 99% by mass, more preferably not more than 98.5% by mass, even more preferably not more than 98% by mass and further even more preferably not more than 97.5% by mass.

The content of the carboxy group-containing monomer (d-2) is preferably not less than 1% by mass, more preferably not less than 1.5% by mass, even more preferably not less than 2% by mass and further even more preferably not less than 2.5% by mass, and is also preferably not more than 50% by mass, more preferably not more than 30% by mass, even more preferably not more than 10% by mass and further even more preferably not more than 5% by mass.

The content mass ratio of the carboxy group-containing monomer (d-2) to the polyoxyalkylene group-containing monomer (d-1) (monomer (d-2)/monomer (d-1)) is preferably not less than 0.01, more preferably not less than 0.02 and even more preferably not less than 0.03, and is also preferably not more than 1, more preferably not more than 0.5, even more preferably not more than 0.1, further even more preferably not more than 0.07 and still further even more preferably not more than 0.05.

In the case where the dispersant D is the vinyl-based polymer that contains the constitutional unit derived from the polyoxyalkylene group-containing monomer (d-1) and the constitutional unit derived from the carboxy group-containing monomer (d-2), the total content of the constitutional unit derived from the monomer (d-1) and the constitutional unit derived from the monomer (d-2) in the vinyl-based polymer is preferably not less than 60% by mass, more preferably not less than 70% by mass, even more preferably not less than 80% by mass, further even more preferably not less than 90% by mass, still further even more preferably not less than 95% by mass and yet still further even more preferably not less than 98% by mass, and is also preferably not more than 100% by mass, from the same viewpoint as described above.

The dispersant D is preferably a vinyl-based polymer that contains a constitutional unit derived from an alkoxy polyalkylene glycol (meth)acrylate as the monomer (d-1) and a constitutional unit derived from at least one monomer selected from the group consisting of (meth)acrylic acid and maleic acid as the monomer (d-2) from the viewpoint of improving dispersion stability of the metal fine particles and improving storage stability of the dispersion as well as from the viewpoint of reducing resistivity of the resulting metal film.

As the aforementioned vinyl-based polymer, there may be used either a synthesized product obtained by conventionally known methods or a commercially available product. Examples of the commercially available product of the vinyl-based polymer include "DISPERBYK-190" and "DISPERBYK-2015" both available from BYK Chemie GmbH, and the like.

In the case where the dispersant D is the aforementioned polycarboxylic acid, or the vinyl-based polymer that contains the constitutional unit derived from the alkoxy polyalkylene glycol (meth)acrylate as the monomer (d-1) and the constitutional unit derived from at least one monomer selected from the group consisting of (meth)acrylic acid and maleic acid as the monomer (d-2), the number-average molecular weight of the vinyl-based polymer is preferably not less than 1,000, more preferably not less than 2,000 and even more preferably not less than 3,000, and is also preferably not more than 100,000, more preferably not more than 50,000, even more preferably not more than 30,000, further even more preferably not more than 10,000 and still further even more preferably not more than 7,000. When the number-average molecular weight of the vinyl-based polymer lies within the aforementioned range, adsorption of the vinyl-based polymer onto the metal fine particles is sufficient, so that the metal fine particles can exhibit good dispersion stability in the dispersion. The number-average molecular weight may be measured by the method described in Examples below.

In the case where the dispersant D is the vinyl-based polymer that contains the constitutional unit derived from the alkoxy polyalkylene glycol (meth)acrylate as the monomer (d-1) and the constitutional unit derived from at least one monomer selected from the group consisting of meth)acrylic acid and maleic acid as the monomer (d-2), the acid value of the vinyl-based polymer is preferably not less than 5 mgKOH/g, more preferably not less than 10 mgKOH/g and even more preferably not less than 15 mgKOH/g, and is also preferably not more than 200 mgKOH/g, more preferably not more than 100 mgKOH/g, even more preferably not more than 50 mgKOH/g and further even more preferably not more than 30 mgKOH/g, from the viewpoint of improving dispersion stability of the metal fine particles and improving storage stability of the dispersion as well as from the viewpoint of reducing resistivity of the resulting metal film.

The acid value of the vinyl-based polymer may also be calculated from a mass ratio between the monomers constituting the vinyl-based polymer. In addition, the acid value of the vinyl-based polymer may also be determined by the method in which the vinyl-based polymer is dissolved in or swelled with an adequate solvent, and then the resulting solution or swelled product is subjected to titration.

In the case where the dispersion D is in the from of a polymer, examples of the configuration of the polymer in the metal fine particle dispersion include the configuration in which the polymer is adsorbed onto the respective metal fine particles, the configuration in which the metal fine particles are incorporated in the polymer, i.e., the metal fine particles are enclosed (encapsulated) in the polymer, and the configuration in which the polymer is not adsorbed onto the respective metal fine particles. From the viewpoint of improving dispersion stability of the metal fine particles, among these configurations, preferred is the configuration in which the metal fine particles are incorporated in the polymer, and more preferred is the metal fine particle-enclosing configuration in which the metal fine particles are enclosed in the polymer.

The content mass ratio of the dispersion D to a sum of the dispersion D and the metal fine particles A [dispersion D/(dispersion D + metal fine particles A)] in the metal fine particle dispersion according to the present invention is preferably not less than 0.01, more preferably not less than 0.03 and even more preferably not less than 0.05, and is also preferably not more than 0.3, more preferably not more than 0.2 and even more preferably not more than 0.15, from the viewpoint of improving dispersion stability of the metal fine particles and improving storage stability of the dispersion as well as from the viewpoint of reducing resistivity of the resulting metal film.

The aforementioned content mass ratio [dispersion D/(dispersion D + metal fine particles A)] may be calculated from masses of the dispersion D and the metal fine particles A which may be measured by the method described in Examples below using a differential thermogravimetric simultaneous measurement apparatus (TG/DTA).

The content of the dispersion D in the metal fine particle dispersion according to the present invention is preferably not less than 1% by mass, more preferably not less than 2% by mass and even more preferably not less than 3% by mass from the viewpoint of improving dispersion stability of the metal fine particles and improving storage stability of the dispersion, and is also preferably not more than 10% by mass, more preferably not more than 7% by mass and even more preferably not more than 5% by mass from the viewpoint of reducing resistivity of the resulting metal film.

In the case where the dispersant D contains the vinyl-based polymer that contains the constitutional unit derived from the carboxy group-containing monomer (d-2), the content of the vinyl-based polymer that contains the constitutional unit derived from the carboxy group-containing monomer (d-2) in the dispersant D is preferably not less than 80% by mass, more preferably not less than 90% by mass, even more preferably not less than 95% by mass, further even more preferably not less than 98% by mass and still further even more preferably substantially 100% by mass from the viewpoint of improving dispersion stability of the metal fine particles and improving storage stability of the dispersion as well as from the viewpoint of reducing resistivity of the resulting metal film. The term "substantially 100% by mass" as used herein means that the dispersant D may contain unintended components. Examples of the unintended components that may be contained in the dispersant D include the dispersant D components other than the aforementioned vinyl-based polymer which may be contained in the aforementioned vinyl-based polymer as the raw material.

The metal fine particle dispersion according to the present invention preferably contains water as a dispersing medium thereof in addition to the polyalkylene glycol dialkyl ether B and the polyol C.

The content of water in the metal fine particle dispersion according to the present invention is preferably not less than 0.5% by mass, more preferably not less than 1% by mass, even more preferably not less than 3% by mass, further even more preferably not less than 5% by mass and still further even more preferably not less than 10% by mass, and is also preferably not more than 30% by mass, more preferably not more than 20% by mass and even more preferably not more than 15% by mass, from the viewpoint of improving dispersion stability of the metal fine particles and improving storage stability of the dispersion as well as from the viewpoint of reducing resistivity of the resulting metal film.

(Production of Metal Fine Particle Dispersion)

The metal fine particle dispersion according to the present invention may be produced by a method of adding and mixing a dispersing medium and the dispersant D into metal fine particles preliminarily prepared by conventionally known methods, a method of mixing a metal raw material compound, a reducing agent and the dispersant D with each other to subject the metal raw material compound to reduction reaction, and the like. Among these methods, from the viewpoint of improving dispersion stability of the metal fine particles and improving storage stability of the dispersion as well as from the viewpoint of reducing resistivity of the resulting metal film, preferred is the method in which after preliminarily obtaining a dried powder of the metal fine particles containing the dispersant D, a dispersing medium containing the polyalkylene glycol dialkyl ether B and the polyol C is added to and mixed in the dried powder of the metal fine particles.

The dried powder of the metal fine particles may be produced by such a method in which after mixing the metal raw material compound, the reducing agent and the dispersant D with each other to subject the metal raw material compound to reduction reaction with the reducing agent and thereby obtain a dispersion liquid of the metal fine particles that arte dispersed therein with the dispersant D, the dispersion liquid of the metal fine particles are dried by freeze drying, etc.

The temperature used in the reduction reaction is preferably not lower than 10 °C, more preferably not lower than 20 °C and even more preferably not lower than 30 °C from the viewpoint of reducing a particle size of the respective metal fine particles and thereby making the metal fine particles uniform, and is also preferably not higher than 70 °C, more preferably not higher than 60 °C and even more preferably not higher than 50 °C from the viewpoint of stably producing the metal fine particles. The reduction reaction may be conducted either in atmospheric air or in an atmosphere of an inert gas, such as nitrogen gas, etc.

The metal raw material compound is not particularly limited as long as it is a compound containing a metal constituting the aforementioned metal fine particles A.

The reducing agent is not particularly limited, and either an inorganic reducing agent or an organic reducing agent may be used herein. Among these reducing agents, preferred is an organic reducing agent.

Examples of the organic reducing agent include alcohols, such as ethylene glycol, propylene glycol, etc.; aldehydes, such as formaldehyde, acetaldehyde, propionaldehyde, etc.; acids, such as ascorbic acid, citric acid, etc., and salts thereof; aliphatic amines, e.g., alkanolamines, such as ethanolamine, *N*-methyl ethanolamine, *N,N*-dimethyl ethanolamine (2-(dimethylamino)ethanol), *N,N*-diethyl ethanolamine, diethanolamine, *N*-methyl diethanolamine, triethanolamine, propanolamine, *N,N*-dimethyl propanolamine, butanolamine, hexanolamine, etc., alkyl amines, such as propylamine, butylamine, hexylamine, diethylamine, dipropylamine, dimethylethylamine, diethylmethylamine, triethylamine, etc., and (poly)alkylene polyamines, such as ethylenediamine, triethylenediamine, tetramethyl ethylenediamine, diethylenetriamine, dipropylenetriamine, triethylenetetramine, tetraethylenepentamine, etc.; alicyclic amines, such as piperidine, pyrrolidine, *N*-methyl pyrrolidine, morpholine, etc.; aromatic amines, such as aniline, *N*-methyl aniline, toluidine, anisidine, phenetidine, etc.; aralkyl amines, such as benzylamine, *N*-methyl benzylamine, etc.; and the like.

These reducing agents may be used alone or in combination of any two or more thereof.

Upon producing the metal fine particle dispersion according to the present invention, from the viewpoint of removing impurities, such as the unreacted reducing agent, a surplus of the dispersant D which has no contribution to dispersion of the metal fine particles A, etc., the dispersion liquid of the metal fine particles may be purified before subjecting the dispersion liquid to the freeze drying.

The method of purifying the dispersion liquid of the metal fine particles is not particularly limited, and there may be used various methods including membrane treatments, such as dialysis, ultrafiltration, etc.; centrifugal separation treatments; and the like. Among these methods, from the viewpoint of efficiently removing the impurities from the resulting dispersion, preferred are the membrane treatments, and more preferred is dialysis. As a material of a dialysis membrane used in the dialysis, there is preferably used a regenerated cellulose.

The molecular weight cutoff of the dialysis membrane is preferably not less than 1,000, more preferably not less than 5,000 and even more preferably not less than 10,000, and is also preferably not more than 100,000 and more preferably not more than 70,000, from the viewpoint of efficiently removing the impurities from the resulting dispersion.

The metal fine particle dispersion according to the present invention is excellent in dispersion stability of the metal fine particles therein, as well as storage stability under environmental conditions at an ordinary temperature or higher, and is capable of forming a metal film having low resistivity. Therefore, the metal fine particle dispersion according to the present invention can be used in extensive applications. Examples of the applications of the metal fine particle dispersion include various inks; conductive materials, such as wiring materials, electrode materials, MLCC (multi-layer ceramic capacitor; hereinafter also referred to merely as "MLCC"), etc.; bonding materials, such as solders, etc.; various sensors; antennas, such as those for automatic identification technique (RFID: radio frequency identifier; hereinafter also referred to merely as "RFID") tags using short-range radio communication, etc.; catalysts; optical materials; medical materials; and the like.

[Ink]

The ink of the present invention contains the aforementioned metal fine particle dispersion. Since the metal fine particle dispersion contains the polyalkylene glycol dialkyl ether B and the polyol C, it is supposed that the resulting ink can be improved in coatability onto a printing substrate, and since these solvents can be gradually desorbed from the metal fine particle dispersion during sintering of the metal fine particles, it is supposed that the metal fine particle dispersion is capable of forming a metal film that is less susceptible to formation of voids therein, so that the resistivity of the resulting metal film can be reduced.

The aforementioned metal fine particle dispersion may be directly used as the ink of the present invention.

Alternatively, the ink may be prepared by adding various additives that may be usually used in inks, such as a fixing assistant, such as a dispersion of polymer particles, etc., a humectant, a wetting agent, a penetrant, a surfactant, a viscosity modifier, a defoaming agent, an antiseptic agent, a mildew-proof agent, a rust preventive, etc., if required, to the aforementioned metal fine particle dispersion, and further the ink may also be subjected to filtration treatment using a filter, etc.

The cumulant average particle size of the metal fine particles A in the aforementioned ink is preferably the same as the cumulant average particle size of the metal fine particles in the aforementioned metal fine particle dispersion, and the preferred range of the cumulant average particle size of the metal fine particles A in the ink is also the same as the preferred range of the cumulant average particle size of the metal fine particles in the metal fine particle dispersion. The cumulant average particle size of the metal fine particles A in the ink may be measured by the same method as used for measuring the cumulant average particle size of the metal fine particles in the metal fine particle dispersion.

The viscosity of the aforementioned ink as measured at 25 °C is preferably not less than 2 mPa•s, more preferably not less than 3 mPa•s, even more preferably not less than 4 mPa•s and further even more preferably not less than 5 mPa•s, and is also preferably not more than 12 mPa•s, more preferably not more than 9 mPa•s, even more preferably not more than 7 mPa•s and further even more preferably not more than 6.5 mPa•s, from the viewpoint of storage stability of the resulting ink. The viscosity of the ink may be measured using an E-type viscometer.

The pH value of the aforementioned ink as measured at 20 °C is preferably not less than 7.0, more preferably not less than 7.2 and even more preferably not less than 7.5 from the viewpoint of storage stability of the resulting ink, and is also preferably not more than 11, more preferably not more than 10 and even more preferably 9.5 from the viewpoint of improving the resistance of members to the ink and suppressing skin irritation. The pH value of the ink may be measured by an ordinary method.

[Method for Producing Printed Material]

The method for producing a printed material according to the present invention is a method including the step of applying the aforementioned ink onto a printing substrate to produce the printed material on which a metal film is formed.

The aforementioned ink is excellent in storage stability under environmental conditions at an ordinary temperature or higher, and is capable of forming a metal film that has low resistivity, and therefore can be suitably used in various printing applications, in particular, for ink-jet printing, flexographic printing, gravure printing, screen printing or the like. Among them, the aforementioned ink is preferably used for ink-jet printing. Since the aforementioned ink contains the polyalkylene glycol dialkyl ether B and the polyol C, it is supposed that dots of the ink can be improved in wet-spreadability on the printing substrate, and since these solvents can be gradually desorbed from the ink during sintering of the metal fine particles, it is supposed that the ink is capable of forming a metal film that is less susceptible to formation of voids therein, so that the resistivity of the resulting metal film can be reduced.

In the case of using the aforementioned ink as an ink for ink-jet printing, the ink may be loaded to a conventionally known ink-jet printing apparatus from which droplets of the ink are ejected onto the printing substrate to print characters or images, etc., on the printing substrate.

Although the ink-jet printing apparatus may be of either a thermal type or a piezoelectric type, the aforementioned ink is preferably used as an ink for ink-jet printing using the ink-jet printing apparatus of a thermal type.

Examples of the printing substrate include a metal member, a resin film, a glass material, a ceramic material, a coated paper, an art paper, a synthetic paper, a processed paper, and the like.

Examples of the metal member include metal-based substrates or substrates made of a metal, such as a gold substrate, a gold-plated substrate, a silver substrate, a silver-plated metal substrate, a copper substrate, a palladium substrate, a palladium-plated metal substrate, a platinum substrate, a platinum-plated metal substrate, an aluminum substrate, a nickel substrate, a nickel-plated substrate, a tin substrate, a tin-plated metal substrate, etc.; metal parts, such as electrodes of electrically insulated substrates, etc.; and the like.

Examples of the resin film include those films formed of polyethylene terephthalate (PET), polybutylene terephthalate (PBT), polyamide (PA), polyvinyl chloride (PVC), polymethyl methacrylate(PMMA), polypropylene (PP), polystyrene (PS), an acrylonitrile-butadiene-styrene copolymer (ABS), an acrylonitrile-styrene copolymer (AS), a polycarbonate (PC), and the like.

(Ink-Jet Printing Conditions)

The temperature of the ink-jet print head is preferably not lower than 15 °C, more preferably not lower than 20 °C and even more preferably not lower than 25 °C, and is also preferably not higher than 45 °C, more preferably not higher than 40 °C and even more preferably not higher than 35 °C, from the viewpoint of reducing resistivity of the resulting metal film.

The head voltage applied to the ink-jet print head is preferably not less than 5 V, more preferably not less than 10 V and even more preferably not less than 15 V, and is also preferably not more than 40 V, more preferably not more than 35 V and even more preferably not more than 30 V, from the viewpoint of improving printing efficiency, etc.

The drive frequency of the ink-jet print head is preferably not less than 1 kHz, more preferably not less than 5 kHz and even more preferably not less than 10 kHz, and is also preferably not more than 50 kHz, more preferably not more than 40 kHz and even more preferably not more than 35 kHz, from the viewpoint of improving printing efficiency, etc.

The amount of droplets of the ink ejected is preferably not less than 5 pL and more preferably not less than 10 pL, and is also preferably not more than 30 pL and more preferably not more than 20 pL, as calculated per one ink droplet ejected.

The amount of the ink applied onto the printing substrate in terms of a solid content thereof is preferably not less than 0.5 g/m$^2$, more preferably not less than 1 g/m$^2$ and even more preferably not less than 2 g/m$^2$, and is also preferably not more than 20 g/m$^2$, more preferably not more than 15 g/m$^2$ and even more preferably not more than 10 g/m$^2$.

The resolution of images printed with the ink is preferably not less than 200 dpi and more preferably not less than 300 dpi, and is also preferably not more than 1,000 dpi, more preferably not more than 800 dpi and even more preferably not more than 600 dpi. Meanwhile, the term "resolution" as used in the present specification means the number of dots per 1 inch (2.54 cm) which are formed on the printing substrate. For example, the "resolution of 600 dpi" means that when the ink droplets are ejected onto the printing substrate using a line print head on which a nozzle row is arranged such that the number of nozzle ports per a length of the nozzle row corresponds to 600 dpi (dots/inch), a corresponding dot row of 600 dpi per 1 inch is formed in the direction perpendicular to a transporting direction of the printing substrate, and further when ejecting the ink droplets while moving the printing substrate in the transporting direction thereof, the dot row of 600 dpi per 1 inch is also formed on the printing substrate along the transporting direction thereof. In the present specification, it is assumed that the value of the resolution in the direction perpendicular to the transporting direction of the printing substrate is the same as the value of the resolution in the transporting direction of the printing substrate.

(Heat Treatment)

In the present invention, from the viewpoint of reducing resistivity of the resulting metal film, it is preferred that after applying the aforementioned ink onto the printing substrate, the obtained ink coating film on the printing substrate is subjected to heat treatment.

By conducting such a heat treatment, it is possible to form a metal film having low resistivity by subjecting the medium in the ink coating film to evaporation to dryness and further sintering the metal fine particles in the ink.

The method of conducting the heat treatment is not particularly limited. The heat treatment may be conducted by a method of blowing a hot air against a surface of the ink coating film on the printing substrate to heat the ink, a method of approaching a heater to the surface of the ink coating film on the printing substrate to heat the ink, a method of bringing a heater into contact with a surface of the printing substrate opposed to its surface on which the ink coating film is formed, to heat the ink, a method of heating the ink on the printing substrate by a steam curing treatment using a high-temperature steam under an ordinary pressure or under a high pressure, and the like.

The temperature used upon the heat treatment is preferably lower than the temperature at which the printing substrate suffers from deformation.

The temperature used upon the heat treatment is preferably not lower than 50 °C, more preferably not lower than 70 °C, even more preferably not lower than 100 °C and further even more preferably not lower than 130 °C, and is also preferably not higher than 300 °C, more preferably not higher than 250 °C and even more preferably not higher than 180 °C, from the viewpoint of reducing resistivity of the resulting metal film. In this case, the heat treatment time is preferably not less than 1 minute from the viewpoint of reducing resistivity of the resulting metal film, and is also preferably not more than 30 minutes, more preferably not more than 20 minutes and even more preferably not more than 15 minutes from the viewpoint of enhancing productivity of the printed material.

The surface resistivity $\rho s$ of the metal film according to the present invention is preferably not more than 10 $\Omega/\square$, more preferably not more than 7 $\Omega/\square$, even more preferably not more than 5 $\Omega/\square$, further even more preferably not more than 3 $\Omega/\square$, still further even more preferably not more than 1 $\Omega/\square$, yet still further even more preferably preferably not more than 0.7 $\Omega/\square$, furthermore preferably not more than 0.5 $\Omega/\square$ and even furthermore preferably not more than 0.3 $\Omega/\square$. From the viewpoint of facilitating production of the printed material, the surface resistivity $\rho s$ of the metal film is also preferably not less than 0.01 $\Omega/\square$, more preferably not less than 0.05 $\Omega/\square$ and even more preferably not less than 0.07 $\Omega/\square$. The aforementioned surface resistivity $\rho s$ may be measured by the method described in Examples below.

The metal film according to the present invention is capable of exhibiting high electrical conductivity and therefore can be used as a conductive member for various electronic and electric equipments. The conductive member is preferably used in the applications including RFID tags; capacitors, such as MLCC, etc.; electronic paper; image display apparatuses, such as liquid crystal display, organic EL display, etc.; organic EL elements; organic transistors; wiring circuit boards, such as a printed circuit board, a flexible circuit board, etc.; organic solar cells; sensors, such as flexible sensors, etc.; bonding agents, such as solders, etc.; and the like. Among these applications, from the viewpoint of facilitating production of the conductive member by an ink-jet printing method, the metal film is preferably used for RFID tags and MLCC.

With respect to the aforementioned embodiments, the present invention further provides the following aspects.

<1> A metal fine particle dispersion, containing metal fine particles A, a polyalkylene glycol dialkyl ether B and a polyol C, in which:

a content mass ratio of the polyalkylene glycol dialkyl ether B to the metal fine particles A (polyalkylene glycol dialkyl ether B/metal fine particles A) is not less than 0.5 and not more than 1.5; and
the metal fine particles A are dispersed in the dispersion with a dispersant D.

<2> The metal fine particle dispersion according to the above aspect <1>, wherein the dispersion contains the metal fine particles A, the polyalkylene glycol dialkyl ether B and the polyol C, in which:

the content mass ratio of the polyalkylene glycol dialkyl ether B to the metal fine particles A (polyalkylene glycol dialkyl ether B/metal fine particles A) is not less than 0.5 and not more than 1.5;
the metal fine particles A are dispersed in the dispersion with the dispersant D;
a metal constituting the metal fine particles A contains at least one metal selected from the group consisting of silver and copper;
the polyalkylene glycol dialkyl ether B contains at least one compound selected from the group consisting of a polyoxyethylene dialkyl ether whose alkyl groups each have not less than 1 and not more than 5 carbon atoms, and a polyoxypropylene dialkyl ether whose alkyl groups each have not less than 1 and not more than 5 carbon atoms;
the polyol C contains at least one compound selected from the group consisting of a 1,2-alkanediol, a polyalkylene glycol, an $\alpha,\omega$-alkanediol and glycerin; and
the dispersant D contains a vinyl-based polymer containing a constitutional unit derived from a carboxy group-containing monomer (d-2).

<3> The metal fine particle dispersion according to the above aspect <1> or <2>, wherein the dispersion contains the metal fine particles A, the polyalkylene glycol dialkyl ether B and the polyol C, in which:

the content mass ratio of the polyalkylene glycol dialkyl ether B to the metal fine particles A (polyalkylene glycol dialkyl ether B/metal fine particles A) is not less than 0.5 and not more than 1.5;
the metal fine particles A are dispersed in the dispersion with the dispersant D;
the metal constituting the metal fine particles A contains at least one metal selected from the group consisting of silver and copper;
the polyalkylene glycol dialkyl ether B contains at least one compound selected from the group consisting of polyoxyethylene dimethyl ether and polyoxypropylene dimethyl ether;
the polyol C contains at least one compound selected from the group consisting of ethylene glycol, 1,2-propanediol, 1,4-butanediol, and glycerin; and
the dispersant D contains the vinyl-based polymer containing the constitutional unit derived from the carboxy group-containing monomer (d-2).

<4> The metal fine particle dispersion according to any one of the above aspects <1> to <3>, wherein a content of the metal fine particles A in the metal fine particle dispersion is not less than 10% by mass and not more than 50% by mass.

<5> The metal fine particle dispersion according to any one of the above aspects <1> to <4>, wherein a total content of silver and copper in the metal fine particles A is not less than 80% by mass.

<6> The metal fine particle dispersion according to any one of the above aspects <1> to <5>, wherein a content mass ratio of the dispersant D to a sum of the dispersant D and the metal fine particles A [dispersant D/(dispersant D + metal fine particles A)] in the metal fine particle dispersion is not less than 0.01 and not more than 0.3.

<7> The metal fine particle dispersion according to any one of the above aspects <1> to <6>, wherein a content mass ratio of the polyol C to the metal fine particles A (polyol C/metal fine particles A) in the metal fine particle dispersion is not less than 0.5 and not more than 1.3.

<8> The metal fine particle dispersion according to any one of the above aspects <1> to <7>, wherein a content mass ratio of the polyol C to the metal fine particles A (polyol C/metal fine particles A) in the metal fine particle dispersion is not less than 0.5 and not more than 1.0.

<9> The metal fine particle dispersion according to any one of the above aspects <1> to <8>, wherein a content of the polyalkylene glycol dialkyl ether B in the metal fine particle dispersion is not less than 5% by mass and not more than 50% by mass.

<10> The metal fine particle dispersion according to any one of the above aspects <2> to <9>, wherein a total content of the at least one compound selected from the group consisting of the polyoxyethylene dialkyl ether whose alkyl groups each have not less than 1 and not more than 5 carbon atoms and the polyoxypropylene dialkyl ether whose alkyl groups each have not less than 1 and not more than 5 carbon atoms in the polyalkylene glycol dialkyl ether B is not less than 80% by mass.

<11> The metal fine particle dispersion according to any one of the above aspects <3> to <9>, wherein a total content of the at least one compound selected from the group consisting of polyoxyethylene dimethyl ether and polyoxypropylene dimethyl ether in the polyalkylene glycol dialkyl ether B is not less than 80% by mass.

<12> The metal fine particle dispersion according to any one of the above aspects <1> to <11>, wherein a content of the polyol C in the metal fine particle dispersion is not less than 3% by mass and not more than 40% by mass.

<13> The metal fine particle dispersion according to any one of the above aspects <2> to <12>, wherein a total content of the at least one compound selected from the group consisting of a 1,2-alkanediol, a polyalkylene glycol, an $\alpha,\omega$-alkanediol and glycerin in the polyol C is not less than 80% by mass.

<14> The metal fine particle dispersion according to any one of the above aspects <3> to <12>, wherein a total content of the at least one compound selected from the group consisting of ethylene glycol, 1,2-propanediol, 1,4-butanediol and glycerin in the polyol C is not less than 80% by mass.

<15> The metal fine particle dispersion according to any one of the above aspects <1> to <14>, wherein the polyalkylene glycol dialkyl ether B contains polyoxyethylene dimethyl ether.

<16> The metal fine particle dispersion according to the above aspect <15>, wherein a content of polyoxyethylene dimethyl ether in the polyalkylene glycol dialkyl ether is not less than 80% by mass.

<17> The metal fine particle dispersion according to any one of the above aspects <1> to <16>, wherein a number-average molecular weight of the polyalkylene glycol dialkyl ether B is not less than 100 and not more than 1,500.

<18> The metal fine particle dispersion according to any one of the above aspects <1> to <17>, wherein a number-average molecular weight of the polyalkylene glycol dialkyl ether B is not less than 160 and not more than 800.

<19> The metal fine particle dispersion according to any one of the above aspects <1> to <18>, wherein the dispersant D is a vinyl-based polymer containing the constitutional unit derived from the carboxy group-containing monomer (d-2) and a constitutional unit derived from a polyoxyalkylene group-containing monomer (d-1).

<20> An ink containing the metal fine particle dispersion according to any one of the above aspects <1> to <19>.

<21> The ink according to the above aspect <20> for ink-jet printing.

<22> A method for producing a printed material, including the step of applying the ink according to the above aspect <20> or <21> onto a printing substrate to produce the printed material on which a metal film is formed.

EXAMPLES

In the following Synthesis Examples, Production Examples, Examples and Comparative Examples, the "part(s)" and "%" indicate "part(s) by mass" and "% by mass", respectively, unless otherwise specified.

(1) Measurement of Number-Average Molecular Weight of Vinyl-Based Polymer

The number-average molecular weight of the vinyl-based polymer was measured by gel permeation chromatography [GPC apparatus: "HLC-8320GPC" available from Tosoh Corporation; columns: "TSKgel Super AWM-H", "TSKgel Super AW3000" and "TSKgel guardcolumn Super AW-H" all available from Tosoh Corporation; flow rate: 0.5 mL/min] using a solution prepared by dissolving phosphoric acid and lithium bromide in N,N dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the polymer with 10 mL of the aforementioned eluent in a glass vial, stirring the resulting mixture at 25 °C for 10 hours with a magnetic stirrer, and then subjecting the mixture to filtration treatment through a syringe filter "DISMIC-13HP" (PTFE; 0.2 $\mu$m) available from Advantec Co., Ltd.

(2) Measurement of Solid Content of Metal Fine Particle Dispersion or Ink

Sodium sulfate dried to constant weight in a desiccator was weighed in an amount of 10.0 g and charged into a 30 mL glass container ($\phi$: 40 mm; height: 30 mm), and about 1.0 g of a sample to be measured was added to the container. The contents of the container were mixed with each other and then accurately weighed. The resulting mixture was maintained in the container at 150 °C under 60 Torr for 10 hours to remove volatile components therefrom, and further allowed to stand in a desiccator adjusted to room temperature (25 °C) for 15 minutes, followed by measuring a mass thereof. The mass of the sample after removing the volatile components therefrom was defined as a mass of solids therein. The solid content of the sample was calculated by dividing the mass of the solids by the mass of the sample initially added.

(3) Calculation of Content Mass Ratio [Dispersant D/(Dispersant D + Metal Fine Particles A)]

Using a freeze dryer "Model No.: FDU-2110" available from TOKYO RIKAKIKAI CO., LTD., equipped with a dry chamber "Model No.: DRC-1000" available from TOKYO RIKAKIKAI CO., LTD., the resulting metal fine particle dispersion or the resulting ink was freeze-dried under the drying conditions (including freezing at -25 °C for 1 hour, pressure reduction at -10 °C for 9 hours and pressure reduction at 25 °C for 5 hours where a vacuum degree used upon the pressure reduction was 5 Pa), thereby obtaining a dried powder of the metal fine particles containing the dispersant D.
Using a differential thermogravimetric simultaneous measurement apparatus (TG/DTA) "STA7200RV" (tradename) available from Hitachi High-Tech Science Corporation, 10 mg of the dried powder of the metal fine particles as a sample to be measured was weighed in an aluminum pan cell, and heated from 35 °C to 550 °C at a temperature rise rate of 10 °C/min to measure a reduced mass of the sample under an air flow of 50 mL/min. The reduced mass of the sample as measured in a temperature range of from 35 °C to 550 °C was defined as a mass of the dispersant D, and a mass of the residue at 550° C was defined as a mass of the metal fine particles A to calculate a content mass ratio [dispersant D/(dispersant D + metal fine particles A)].

(4) Calculation of Content (Metal Concentration) of Metal Fine Particles A in Metal Fine Particle Dispersion or Ink

The content (metal concentration) of the metal fine particles A in the metal fine particle dispersion or the ink was calculated from the mass ratio [dispersant D/(dispersant D + metal fine particles A)] obtained in the above item (3) and the solid content of the metal fine particle dispersion or the ink obtained in the above item (2).

(5) Cumulant Average Particle Size of Metal Fine Particles A in Metal Fine Particle Dispersion

The metal fine particle dispersion was subjected to cumulant analysis using a laser particle analyzing system "ELS-8000" available from Otsuka Electrics Co., Ltd., to measure a cumulant average particle size of metal fine particles A in the metal fine particle dispersion. The measurement was conducted under the conditions including a temperature of 25°C, an angle between incident light and detector of 90° and a cumulative number of 100 times, and a refractive index of water (1.333) was used as a refractive index of the dispersing medium. The concentration of the sample to be measured was controlled to $5 \times 10^{-3}$% by mass (in terms of a solid content thereof.

Synthesis Example 1 (Synthesis of Dispersant D1)

A 1000 mL four-necked round bottom flask equipped with a thermometer, a 200 mL nitrogen bypass-fitted dropping funnel (1), a 50 mL nitrogen bypass-fitted dropping funnel (2) and a refluxing device was charged with 100 g of ion-exchanged water, and while intensively stirring the ion-exchanged water with a magnetic stirrer, an inside temperature of the flask was increased up to 80 °C in an oil bath. Separately, the ion-exchanged water in the flask was subjected to bubbling with nitrogen for 10 minutes. Thereafter, 97 g of methoxy polyethylene glycol (EO: 9 mol) acrylate "NK Ester AM-90G" available from Shin-Nakamura Chemical Co., Ltd., 3 g of 98% acrylic acid (guaranteed reagent) available from FUJIFILM Wako Pure Chemical Corporation and 1.5 g of 3-mercaptopropionic acid (guaranteed reagent) available from FUJIFILM Wako Pure Chemical Corporation were dissolved in a plastic beaker, and the resulting solution was charged into the dropping funnel (1). Furthermore, 20 g of ion-exchanged water and 2 g of ammonium peroxodisulfate (guaranteed reagent) available from FUJIFILM Wako Pure Chemical Corporation were dissolved in a plastic beaker, and the resulting solution was charged into the dropping funnel (2). Thereafter, the respective mixtures in the the dropping funnels (1) and (2) were added dropwise into the aforementioned flask at the same time over 90 minutes. After that, the inside temperature of the flask was increased to 90 °C, followed by continuously stirring the contents of the flask for 1 hour. Then, the contents of the flask were cooled to room temperature, thereby obtaining a solution of a dispersant D 1 (methoxy polyethylene glycol (EO: 9 mol) acrylate/acrylic acid copolymer; Mn: 4,200; acid value: 23 mgKOH/g).

Synthesis Example 2 (Synthesis of Dispersant D2)

The same procedure as in Synthesis Example 1 was repeated except that no methoxy polyethylene glycol (EO: 9 mol) acrylate available from Shin-Nakamura Chemical Co., Ltd., was used, and the amount of 98% acrylic acid used was changed to 100 g, thereby obtaining a solution of a dispersant D2 (polyacrylic acid; Mn: 1,100; acid value: 780 mgKOH/g).

Production Example 1 (Production of Dried Powder 1 of Silver Fine Particles)

Twenty three grams of *N,N*-dimethyl ethanolamine as a reducing agent were charged into a 100 mL glass beaker, and then heated to 40 °C in an oil bath while stirring with a magnetic stirrer.
Separately, a 100 mL beaker was charged with 140 g of silver nitrate as a metal raw material compound, 8 g of an absolute dry product of the dispersant D 1 obtained in Synthesis Example 1 as the dispersant D and 70 g of ion-exchanged water, and then the contents of the beaker were stirred at 40 °C with a magnetic stirrer until they became transparent when visually observed, thereby obtaining a mixed solution.
Next, the aforementioned mixed solution was charged into a 1000 mL dropping funnel, and then added dropwise to *N,N*-dimethyl ethanolamine maintained at 40 °C in the glass beaker over 30 minutes. Thereafter, the contents of the glass beaker were stirred for 5 hours while controlling the temperature of the resulting reaction solution to 40 °C in an oil bath, and then the obtained reaction solution was air-cooled, thereby obtaining a dark brown dispersion liquid containing the silver fine particles dispersed therein.
The whole amount of the resulting dispersion liquid was charged into a dialysis tube "Spectra/Por 6" (tradename; dialysis membrane: regenerated cellulose; molecular weight cutoff (MWCO) = 50 K) available from Repligen Corporation, and the dialysis tube was hermetically sealed with closers at opposite upper and lower ends thereof. The thus closed dialysis tube was dipped in 5 L of ion-exchanged water filled in a 5 L glass beaker, followed by stirring the dispersion liquid for 1 hour while maintaining the water temperature in the range of 20 to 25 °C. Thereafter, the whole amount of the ion-exchanged water was replaced with new one every one hour, and after the replacement procedure was repeated three times, the dispersion liquid was sampled every one hour. The sampled dispersion liquid was diluted with ion-exchanged water to control a concentration of silver therein to 1%, and the dialysis was terminated when the electrical conductivity of the diluted dispersion liquid of the silver fine particles became 7 mS/m, thereby obtaining a purified dispersion liquid of the silver fine particles.
Using a freeze dryer "Model No.: FDU-2110" available from TOKYO RIKAKIKAI CO., LTD., equipped with a dry chamber "Model No.: DRC-1000" available from TOKYO RIKAKIKAI CO., LTD., the thus purified dispersion liquid of the silver fine particles was freeze-dried under the drying conditions (including freezing at -25 °C for 1 hour, pressure reduction at -10 °C for 9 hours and pressure reduction at 25 °C for 5 hours where a vacuum degree used upon the pressure reduction was 5 Pa), thereby obtaining a dried powder 1 of the silver fine particles containing the dispersant D1.

Production Example 2 (Production of Dried Powder 2 of Silver Fine Particles)

The same procedure as in Production Example 1 was repeated except that the dispersant D2 obtained in Synthesis Example 2 was used in place of the dispersant D1, thereby obtaining a dried powder 2 of the silver fine particles containing the dispersant D2.

Production Example 3 (Production of Dried Powder 1 of Copper Fine Particles)

A 2 L beaker was charged with 205 g of copper sulfate pentahydrate (guaranteed reagent) available from FUJIFILM Wako Pure Chemical Corporation as a metal raw material compound, 8 g of an absolute dry product of the dispersant D1 obtained in Synthesis Example 1 as the dispersant D and 1000 g of ion-exchanged water, and then the contents of the beaker were stirred at 40 °C with a magnetic stirrer until they became transparent when visually observed, thereby obtaining a mixed solution.
Next, 13 g of hydrazine monohydrate (guaranteed reagent) available from FUJIFILM Wako Pure Chemical Corporation was charged into a 50 mL dropping funnel, and then added dropwise to the aforementioned mixed solution in the beaker at room temperature over 60 minutes. Thereafter, the contents of the beaker were stirred for 5 hours while controlling the temperature of the resulting reaction solution to 40 °C in an oil bath, and then the obtained reaction solution was air-cooled, thereby obtaining a red brown dispersion liquid containing copper fine particles dispersed therein.
The whole amount of the resulting dispersion liquid was charged into a dialysis tube "Spectra/Por 6" (tradename; dialysis membrane: regenerated cellulose; molecular weight cutoff (MWCO) = 50 K) available from Repligen Corporation, and the dialysis tube was hermetically sealed with closers at opposite upper and lower ends thereof. The thus closed dialysis tube was dipped in 5 L of ion-exchanged water filled in a 5 L glass beaker, followed by stirring the dispersion liquid for 1 hour while maintaining the water temperature in the range of 20 to 25 °C. Thereafter, the whole amount of the ion-exchanged water was replaced with new one every one hour, and after the replacement procedure was repeated three times, the dispersion liquid was sampled every one hour. The sampled dispersion liquid was diluted with ion-exchanged water to control a concentration of copper therein to 1%, and the dialysis was terminated when the electrical conductivity of the diluted dispersion liquid of the copper fine particles became 7 mS/m, thereby obtaining a purified dispersion liquid of the copper fine particles.

Using a freeze dryer "Model No.: FDU-2110" available from TOKYO RIKAKIKAI CO., LTD., equipped with a dry chamber "Model No.: DRC-1000" available from TOKYO RIKAKIKAI CO., LTD., the thus purified dispersion liquid of the copper fine particles was freeze-dried under the drying conditions (including freezing at -25 °C for 1 hour, pressure reduction at -10 °C for 9 hours and pressure reduction at 25 °C for 5 hours where a vacuum degree used upon the pressure reduction was 5 Pa), thereby obtaining a dried powder 1 of the copper fine particles containing the dispersant D1.

Example 1

(1) Production of Metal Fine Particle Dispersion 1

A 500 mL polyethylene beaker was charged with 50 g of the dried powder 1 of the silver fine particles obtained in Production Example 1 (in which the amount of silver compounded as the metal fine particles A was 45 g), 45 g of polyethylene glycol dimethyl ether (guaranteed reagent; number-average molecular weight: 240) available from FUJIFILM Wako Pure Chemical Corporation, 35 g of 1,2-propanediol (guaranteed reagent) available from FUJIFILM Wako Pure Chemical Corporation and 20 g of ion-exchanged water, and the contents of the beaker were dispersed for 1 hour using an ultrasonic disperser "US-3001" available from NISSEI Corporation while stirring with a magnetic stirrer. Thereafter, the obtained dispersion was subjected to filtration treatment using a 5 $\mu$m-pore size disposable membrane filter "Minisart" available from Sartorius Inc., thereby obtaining a metal fine particle dispersion 1. The cumulant average particle size of the metal fine particles A (silver fine particles) in the metal fine particle dispersion 1 was 21 nm. The thus obtained metal fine particle dispersion 1 was evaluated by the following methods.

(2) Ink-Jet Printing

Using the resulting metal fine particle dispersion 1 as an ink, the ink was refilled in a black cartridge, and the thus refilled black cartridge was loaded to an ink-jet printer "Model No.: DISK JET 6122" of a thermal type available from Hewlett-Packard Company under the environmental conditions of a temperature of 25±1 °C and a relative humidity of 30±5%. Next, the menu item of the printer was set to UTILITY to subject the printer to a cleaning operation one time. After confirming such a condition that the ink was ejectable from the whole nozzles of a black print head of the ink-jet printer, a solid image having a size of 204 mm in width and 275 mm in length was printed using the ink-jet printer on a commercially available paper board "Powercoat XD" available from Arjowggings by setting RGB on a Photoshop (registered trademark) to 0 [printing conditions: kind of paper: glossy photo paper; mode set: clean (kirei); gray scale].

Next, the paper board on which a coating film of the ink had been formed was heated on a hot stage at 150 °C for 10 minutes, and then stored under the conditions of a temperature of 25 °C and a humidity of 55% for 24 hours, thereby obtaining a printed material on which a metal film was formed. The thus obtained printed material was evaluated by the following methods.

Examples 2 to 13 and Comparative Examples 1 to 5

The same procedure as in Example 1 was repeated except that the respective components formulated were changed to those shown in Table 1, thereby obtaining metal fine particle dispersions 12 to 13 and 51 to 55. The cumulant average particle sizes of the metal fine particles in the respective metal fine particle dispersions are shown in Table 1. These metal fine particle dispersions were respectively used as an ink by the same method as in Example 1, thereby obtaining respective printed materials. The resulting metal fine particle dispersions and printed materials were evaluated by the following methods.

The details of the respective components shown in Table 1 are as follows.

PAGDA-1: Polyethylene glycol dimethyl ether (guaranteed reagent; number-average molecular weight: 240) available from FUJIFILM Wako Pure Chemical Corporation.

PAGDA-2: Polypropylene glycol dimethyl ether (guaranteed reagent; number-average molecular weight: 250) available from FUJIFILM Wako Pure Chemical Corporation.

PAGDA-3: Tripropylene glycol dipentyl ether (guaranteed reagent; number-average molecular weight: 220) available from FUJIFILM Wako Pure Chemical Corporation.

PAGDA-4: Triethylene glycol dimethyl ether (guaranteed reagent; number-average molecular weight: 178) available from FUJIFILM Wako Pure Chemical Corporation.

PAGDA-5: Polyethylene glycol dimethyl ether (number-average molecular weight: 1100) available from Sigma Aldrich Inc.

PAGDA-6: Polyethylene glycol dimethyl ether (number-average molecular weight: 600) available from Sigma Aldrich Inc.

PAG-1: Polyethylene glycol 300 (number-average molecular weight: 300) available from Sigma Aldrich Inc.

PG: 1,2-Propanediol

BG: 1,4-Butanediol

<Evaluation>

[Evaluation of Storage Stability]

The viscosities of the respective metal fine particle dispersions obtained in the aforementioned Examples and Comparative Examples were measured at 25 °C using an E-type viscometer "TV-25" (equipped with a standard cone rotor (1°34' x R24); rotating speed: 50 rpm) available from Toki Sangyo Co., Ltd., and the thus measured viscosity values were respectively defined as a "viscosity (I) before storage stability test". Furthermore, the viscosities of the inks obtained by storing these dispersions in an oven at 60 °C for 6 weeks were measured by the same method as described above, and the thus measured viscosity values were respectively defined as a "viscosity (II) after storage stability test". Next, the rate of change in viscosity of the respective inks between before and after the storage stability test was calculated according to the following formula, and was used as an index of storage stability of the respective inks. The results are shown in Table 1. As the rate of change in viscosity of the ink is closer to 100%, the storage stability of the ink becomes more excellent.

$$\text{Rate (\%) of Change in Viscosity} = [\text{Viscosity (II) After Storage}$$

$$\text{Stability Test/Viscosity (I) Before Storage Stability Test}] \times 100$$

[Evaluation of Surface Resistivity]

The respective printed materials obtained in the aforementioned Examples and Comparative Examples were cut vertically from one side surface thereof opposed to the other side surface thereof on which the metal film was formed, using a stainless steel razor (76 razor for ordinary use; blade thickness: 76 $\mu$m) available from FEATHER Safety Razor Co., Ltd., to thereby obtain a cut sample having a size of 1 cm x 2 cm.

Then, the surface resistivity (Q/D) of the thus obtained cut sample was measured by a resistivity meter (body: "Loresta-GP"; four-point probe: PSP probe, both available from Mitsubishi Chemical Analytech Co., Ltd.), and the value of the thus measured surface resistivity was rounded off to second decimal places. The measurement of the surface resistivity was conducted at 10 positions in total on the cut sample in the same manner as described above to determine a surface resistivity $\rho$s ($\Omega/\square$) of the metal film formed on the printed material as an arithmetic mean of the thus measured 10 values. The results are shown in Table 1. The lower the surface resistivity $\rho$s becomes, the more excellent the electrical conductivity of the metal film is.

TABLE 1-1

Formulation of metal fine particle dispersion

| | No. of metal fine particle dispersion | Dried powder of metal fine particles | | | Polyalkylene glycol dialkyl ether B | | | Polyol C | | Water |
|---|---|---|---|---|---|---|---|---|---|---|
| | | Kind | Kind of dispersant D | Amount formulated (g) | Kind | Number-average molecular weight | Amount formulated (g) | Kind | Amount formulated (g) | Amount formulated (g) |
| Examples | 1 | Dried powder 1 of silver fine particles | D1 | 50 | PAGDA-1 | 240 | 45 | PG | 35 | 20 |
| | 2 | Dried powder 1 of silver fine particles | D1 | 50 | PAGDA-1 | 240 | 45 | PG | 20 | 35 |
| | 3 | Dried powder 1 of silver fine particles | D1 | 50 | PAGDA-1 | 240 | 45 | PG | 50 | 20 |
| | 4 | Dried powder 1 of silver fine particles | D1 | 50 | PAGDA-1 | 240 | 45 | BG | 35 | 20 |
| | 5 | Dried powder 1 of silver fine particles | D1 | 50 | PAGDA-2 | 250 | 45 | PG | 35 | 20 |
| | 6 | Dried powder 1 of silver fine particles | D1 | 50 | PAGDA-3 | 220 | 45 | PG | 35 | 20 |
| | 7 | Dried powder 1 of silver fine particles | D1 | 50 | PAGDA-4 | 178 | 45 | PG | 35 | 20 |
| | 8 | Dried powder 1 of silver fine particles | D1 | 50 | PAGDA-5 | 1100 | 45 | PG | 35 | 20 |
| | 9 | Dried powder 1 of silver fine particles | D1 | 50 | PAGDA-6 | 600 | 45 | PG | 35 | 20 |

(continued)

| | | No. of metal fine particle dispersion | Formulation of metal fine particle dispersion | | | | | | | | | |
|---|---|---|---|---|---|---|---|---|---|---|---|---|
| | | | Dried powder of metal fine particles | | | Polyalkylene glycol dialkyl ether B | | | Polyol C | | Water |
| | | | Kind | Kind of dispersant D | Amount formulated (g) | Kind | Number-average molecular weight | Amount formulated (g) | Kind | Amount formulated (g) | Amount formulated (g) |
| | 10 | 10 | Dried powder 2 of silver fine particles | D2 | 50 | PAGDA-1 | 240 | 45 | PG | 35 | 20 |
| | 11 | 11 | Dried powder 1 of silver fine particles | D1 | 50 | PAGDA-1 | 240 | 27 | PG | 35 | 38 |
| | 12 | 12 | Dried powder 1 of silver fine particles | D1 | 50 | PAGDA-1 | 240 | 63 | PG | 35 | 2 |
| | 13 | 13 | Dried powder 1 of copper fine particles | D1 | 50 | PAGDA-1 | 240 | 45 | PG | 35 | 20 |
| Comparative Examples | 1 | 51 | Dried powder 1 of silver fine particles | D1 | 50 | - | - | 0 | PG | 35 | 65 |
| | 2 | 52 | Dried powder 1 of silver fine particles | D1 | 50 | PAG-1 | 300 | 45 | PG | 35 | 20 |
| | 3 | 53 | Dried powder 1 of silver fine particles | D1 | 50 | PAGDA-1 | 240 | 20 | PG | 35 | 45 |
| | 4 | 54 | Dried powder 1 of silver fine particles | D1 | 50 | PAGDA-1 | 240 | 70 | PG | 35 | 0 |

(continued)

| No. of metal fine particle dispersion | Formulation of metal fine particle dispersion | | | | | | | | |
|---|---|---|---|---|---|---|---|---|---|
| | Dried powder of metal fine particles | | | Polyalkylene glycol dialkyl ether B | | | Polyol C | | Water |
| | Kind | Kind of dispersant D | Amount formulated (g) | Kind | Number-average molecular weight | Amount formulated (g) | Kind | Amount formulated (g) | Amount formulated (g) |
| 55 | Dried powder 1 of silver fine particles | D1 | 50 | PAGDA-1 | 240 | 45 | - | 0 | 55 |

TABLE 1-2

| | | Composition of metal fine particle dispersion | | | | Cumulant average particle size of metal fine particles (nm) | Evaluation | | | |
|---|---|---|---|---|---|---|---|---|---|---|
| | | Content of metal fine particles A (% by mass) | Content of dispersant D (% by mass) | Content mass ratio (B/A)*1 | Content mass ratio (C/A)*2 | | Viscosity (I) before test | Viscosity (II) after test | Rate of change in viscosity | Surface resistivity ρs |
| | | | | | | | mPa•s | mPa•s | % | Ω/□ |
| Examples | 1 | 30 | 3.3 | 1.00 | 0.78 | 21 | 6.3 | 6.4 | 102 | 0.11 |
| | 2 | 30 | 3.3 | 1.00 | 0.44 | 24 | 5.9 | 6.2 | 105 | 3.50 |
| | 3 | 27 | 3.0 | 1.00 | 1.11 | 20 | 8.8 | 9.0 | 102 | 4.80 |
| | 4 | 30 | 3.3 | 1.00 | 0.78 | 22 | 7.1 | 7.4 | 104 | 2.90 |
| | 5 | 30 | 3.3 | 1.00 | 0.78 | 24 | 10.2 | 10.6 | 104 | 1.90 |
| | 6 | 30 | 3.3 | 1.00 | 0.78 | 24 | 6.9 | 7.3 | 106 | 5.90 |
| | 7 | 30 | 3.3 | 1.00 | 0.78 | 22 | 5.8 | 5.9 | 102 | 0.70 |
| | 8 | 30 | 3.3 | 1.00 | 0.78 | 21 | 6.8 | 7.0 | 103 | 1.80 |
| | 9 | 30 | 3.3 | 1.00 | 0.78 | 21 | 6.1 | 6.4 | 105 | 0.43 |
| | 10 | 30 | 3.3 | 1.00 | 0.78 | 20 | 6.7 | 7.2 | 107 | 0.51 |
| | 11 | 30 | 3.3 | 0.60 | 0.78 | 22 | 5.9 | 6.4 | 108 | 3.97 |
| | 12 | 30 | 3.3 | 1.40 | 0.78 | 23 | 5.4 | 5.9 | 109 | 4.94 |
| | 13 | 30 | 3.3 | 1.00 | 0.78 | 31 | 7.8 | 8.3 | 106 | 0.80 |
| Comparative Examples | 1 | 30 | 3.3 | 0.00 | 0.78 | 24 | 4.2 | 5.4 | 129 | 32.00 |
| | 2 | 30 | 3.3 | 1.00 | 0.78 | 23 | 9.7 | 11.2 | 115 | 26.00 |
| | 3 | 30 | 3.3 | 0.44 | 0.78 | 21 | 5.1 | 5.7 | 112 | 28.00 |
| | 4 | 29 | 3.2 | 1.56 | 0.78 | 21 | 4.9 | 5.9 | 120 | 30.00 |
| | 5 | 30 | 3.3 | 1.00 | 0.00 | 23 | 4.5 | 5.1 | 113 | 19.00 |

Note: *1: Content mass ratio (polyalkylene glycol dialkyl ether B/metal fine particles A)
*2: Content mass ratio (polyol C/metal fine particles A)

From Table 1, it was confirmed that the respective metal fine particle dispersions obtained in Examples 1 to 13 were excellent in storage stability because the values of rates of change in viscosity thereof were close to 100%, and since the metal film produced using the respective dispersions had low surface resistivity, the respective printed materials obtained therein were excellent in electrical conductivity, as compared to those obtained in Comparative Examples 1 to 5.

Industrial Applicability

According to the present invention, it is possible to obtain a metal fine particle dispersion or an ink containing the metal fine particle dispersion which is excellent in storage stability even under the environmental conditions at an ordinary temperature or higher, and also obtain a printed material on which a metal film having low resistivity is formed. Therefore, the metal fine particle dispersion and the ink containing the metal fine particle dispersion can be suitably used in various application fields.

**Claims**

1. A metal fine particle dispersion comprising metal fine particles A, a polyalkylene glycol dialkyl ether B and a polyol C, in which:

   a content mass ratio of the polyalkylene glycol dialkyl ether B to the metal fine particles A (polyalkylene glycol dialkyl ether B/metal fine particles A) is not less than 0.5 and not more than 1.5; and
   the metal fine particles A are dispersed in the dispersion with a dispersant D.

2. The metal fine particle dispersion according to claim 1, wherein a content mass ratio of the polyol C to the metal fine particles A (polyol C/metal fine particles A) is not less than 0.1 and not more than 1.3.

3. The metal fine particle dispersion according to claim 1 or 2, wherein the polyol C comprises at least one compound selected from the group consisting of a 1,2-alkanediol, a polyalkylene glycol, an $\alpha$, $\omega$-alkanediol and glycerin.

4. The metal fine particle dispersion according to any one of claims 1 to 3, wherein a content of the polyol C in the metal fine particle dispersion is not less than 3% by mass and not more than 40% by mass.

5. The metal fine particle dispersion according to any one of claims 1 to 4, wherein the polyalkylene glycol dialkyl ether B comprises at least one compound selected from the group consisting of a polyoxyethylene dialkyl ether whose alkyl groups each comprise not less than 1 and not more than 5 carbon atoms, and a polyoxypropylene dialkyl ether whose alkyl groups each comprise not less than 1 and not more than 5 carbon atoms.

6. The metal fine particle dispersion according to any one of claims 1 to 5, wherein a number-average molecular weight of the polyalkylene glycol dialkyl ether B is not less than 100 and not more than 1,500.

7. The metal fine particle dispersion according to any one of claims 1 to 6, wherein a content of the polyalkylene glycol dialkyl ether B in the metal fine particle dispersion is not less than 5% by mass and not more than 50% by mass.

8. The metal fine particle dispersion according to any one of claims 1 to 7, wherein the dispersant D comprises a vinyl-based polymer comprising a constitutional unit derived from a carboxy group-containing monomer (d-2).

9. The metal fine particle dispersion according to any one of claims 1 to 8, wherein the dispersant D comprises a vinyl-based polymer comprising the constitutional unit derived from the carboxy group-containing monomer (d-2) and a constitutional unit derived from a polyoxyalkylene group-containing monomer (d-1).

10. The metal fine particle dispersion according to any one of claims 1 to 9, wherein a content of the metal fine particles A in the metal fine particle dispersion is not less than 10% by mass and not more than 50% by mass.

11. The metal fine particle dispersion according to any one of claims 1 to 10, wherein a content mass ratio of the dispersant D to a sum of the dispersant D and the metal fine particles A [dispersant D/(dispersant D + metal fine particles A)] in the metal fine particle dispersion is not less than 0.01 and not more than 0.3.

12. The metal fine particle dispersion according to any one of claims 1 to 11, wherein a metal constituting the metal fine particles A comprises at least one metal selected from the group consisting of silver and copper.

13. An ink comprising the metal fine particle dispersion according to any one of claims 1 to 12.

14. The ink according to claim 13 for use in ink-jet printing.

15. A method for producing a printed material, comprising the step of applying the ink according to claim 13 or 14 onto a printing substrate to produce the printed material on which a metal film is formed.

## INTERNATIONAL SEARCH REPORT

| International application No. |
|---|
| PCT/JP2021/021546 |

**A. CLASSIFICATION OF SUBJECT MATTER**
Int. Cl. B22F9/00(2006.01)i, B82Y30/00(2011.01)i, B41J2/01(2006.01)i, C09D11/322(2014.01)i, G09D11/38(2014.01)i, C09D11/52(2014.01)i, H01B1/22(2006.01)i, B41M5/00(2006.01)i, H01B13/00(2006.01)i
FI: B22F9/00 B, B41J2/01 501, B41M5/00 120, B82Y30/00, C09D11/322, C09D11/38, C09D11/52, H01B1/22 A, H01B13/00 503Z

According to International Patent Classification (IPC) or to both national classification and IPC

**B. FIELDS SEARCHED**

Minimum documentation searched (classification system followed by classification symbols)
Int. Cl. B22F9/00, B82Y30/00, B41J2/01, C09D11/322, C09D11/38, C09D11/52, H01B1/22, B41M5/00, H01B13/00

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2007-332347 A (SAMSUNG ELECTRO-MECHANICS CO., LTD.) 27 December 2007 (2007-12-27), entire text, all drawings | 1-15 |
| A | JP 2011-149028 A (SEIKO EPSON CORP.) 04 August 2011 (2011-08-04), entire text, all drawings | 1-15 |
| A | JP 2013-159646 A (SEIKO EPSON CORP.) 19 August 2013 (2013-08-19), entire text, all drawings | 1-15 |
| A | WO 2015/088008 A1 (NISSAN CHEMICAL INDUSTRIES, LTD.) 18 June 2015 (2015-06-18), entire text, all drawings | 1-15 |

☒ Further documents are listed in the continuation of Box C.        ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05.08.2021 | 17.08.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2021/021546

C (Continuation). DOCUMENTS CONSIDERED TO BE RELEVANT

| Category* | Citation of document, with indication, where appropriate, of the relevant passages | Relevant to claim No. |
|---|---|---|
| A | US 2008/0041269 A1 (BOGALE, Rahel Bekru) 21 February 2008 (2008-02-21), entire text, all drawings | 1-15 |

Form PCT/ISA/210 (continuation of second sheet) (January 2015)

**INTERNATIONAL SEARCH REPORT**
Information on patent family members

International application No.

PCT/JP2021/021546

| Patent Documents referred to in the Report | Publication Date | Patent Family | Publication Date |
|---|---|---|---|
| JP 2007-332347 A | 27.12.2007 | US 2007/0289483 A1 entire text, all drawings KR 10-0777662 B1 CN 101089058 A | |
| JP 2011-149028 A | 04.08.2011 | (Family: none) | |
| JP 2013-159646 A | 19.08.2013 | US 2013/0196127 A1 entire text, all drawings EP 2623569 A1 CN 103242713 A | |
| WO 2015/088008 A1 | 18.06.2015 | (Family: none) | |
| US 2008/0041269 A1 | 21.02.2008 | WO 2008/021472 A2 entire text, all drawings | |

Form PCT/ISA/210 (patent family annex) (January 2015)

**EP 4 197 673 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007194174 A
- JP 2007327034 A
- JP 2013231103 A